# EUROPEAN PATENT APPLICATION

(11) **EP 4 557 632 A1**
(43) Date of publication of application: **21.05.2025**
(21) Application number: 23839899.4
(22) Date of filing: 10.07.2023
(51) Int. Cl.: H04B 7/155, H04B 7/0404, H04W 74/00, H04W 84/04, H04B 7/08, H04W 72/20, H04W 16/28, H04B 7/06

(54) **OPERATION METHOD OF DEVICE IN WIRELESS COMMUNICATION SYSTEM, AND DEVICE USING SAME METHOD**

(30) Priority: 15.07.2022 KR 20220087367; 15.07.2022 KR 20220087386; 22.07.2022 KR 20220090838; 09.08.2022 KR 20220099249
(71) Applicant: LG Electronics Inc., Yeongdeungpo-gu Seoul 07336 (KR)
(72) Inventor: YOU, Hyangsun, Seoul 06772 (KR); KO, Hyunsoo, Seoul 06772 (KR); SHIM, Jaenam, Seoul 06772 (KR); BAN, Choongsang, Seoul 06772 (KR)
(74) Representative: Plasseraud IP
(86) International application number: PCT/KR2023/009759
(87) International publication number: WO 2024/014806

(57) **Abstract**

Provided are an operation method of a device in a wireless communication system, and a device using the method. In the method, the device receives SSB configuration information from a network, and performs a forwarding operation on the basis of the SSB configuration information. The device performs a forwarding operation only in a time resource through which a SSB corresponding to a specific SSB index among SSB indexes indicated by the SSB configuration information is transmitted. The SSB configuration information indicates a beam ID or TCI state associated with each SSB index. The device may perform a forwarding operation of an access link, by using a beam determined on the basis of the beam ID or TCI state associated with the specific SSB index, in a time resource through which an SSB having a specific SSB index is transmitted.

## Description

### TECHNICAL FIELD

The present disclosure relates to a method of operating a device in a wireless communication system and a device using the method.

### BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR).

Meanwhile, a repeater (also referred to as a relay) may be introduced into NR. The repeater is network-controlled repeater (NCR). NCR may include NCR-MT (mobile termination) and NCR-Fwd (Forwarding). The NCR-MT may perform a role of communicating with the base station and controlling the NCR-Fwd. The NCR-Fwd performs signal forwarding function. That is, a signal received from a base station can be transmitted to a UE, or a signal received from a UE can be transmitted to the base station.

An NCR can be located within the coverage of a base station. The NCR forwards the essential signals transmitted by the base station, for example, the synchronization signal/physical broadcast channel block (SSB). However, in some cases, it may be necessary for the UE to receive signaling directly from the base station rather than the signaling forwarded by the NCR.

In addition, in the case of conventional repeaters, signals were transmitted and received only in a fixed direction with the base station. On the other hand, in the case of future NCR, the beam of the backhaul link of NCR-Fwd, i.e., the link between the base station and NCR-Fwd, is adjusted to match the beam on which NCR-MT performs transmission and reception For example, if the base station informs or determines the beam direction used for communication with the NCR-MT, the beam direction of the backhaul link of the NCR-Fwd can be adjusted to the same. In this case, the issue may be how to determine the beam direction on the access link of the NCR-Fwd, i.e., the link between the UE and the NCR-Fwd.

One solution is for the base station to explicitly indicate the beam direction of the access link. However, this approach can lead to excessive signaling overhead.

### DISCLOSURE

### TECHNICAL PROBLEM

The technical problem to be solved by the present disclosure is to provide a method of operating a device in a wireless communication system and a device using the method.

### TECHNICAL SOLUTION

Provided are a method of operating a device in a wireless communication system and the device. The device performs an initial access procedure with a network, receives synchronization signal/physical broadcast channel block (SSB) configuration information from the network and performs a forwarding operation based on the SSB configuration information. Here, the device performs the forwarding operation only in a time resource in which an SSB related to a specific SSB index among SSB indexes informed by the SSB configuration information is transmitted.

The SSB configuration information informs a beam identity (ID) or a transmission configuration indicator (TCI) state related to each SSB index, and the device performs a forwarding operation of the access link using a beam determined based on the beam ID or the TCI state related to the specific SSB index, in a time resource in which an SSB having the specific SSB index is transmitted.

### ADVANTAGEOUS EFFECTS

According to the present disclosure, even when an NCR is located within the coverage area of a base station, a UE can directly receive and measure essential signals transmitted by the base station as needed.

Additionally, signaling overhead in controlling the forwarding operation of NCR can be reduced.

### BRIEF DESCRIPTION OF THE DRAWINGS

FIG. 1 illustrates a system structure of a New Generation Radio Access Network (NG-RAN) to which NR is applied.
FIG. 2 is a diagram showing a wireless protocol architecture for a user plane.
FIG. 3 is a diagram showing a wireless protocol architecture for a control plane.
FIG. 4 illustrates a functional division between an NG-RAN and a 5GC.
FIG. 5 illustrates an example of a frame structure that may be applied in NR.
FIG. 6 illustrates a slot structure of the NR frame.
FIG. 7 illustrates a CORESET.
FIG. 8 shows an example of a frame structure for a new radio access technology.
FIG. 9 illustrates a structure of self-contained slot.
FIG. 10 illustrates physical channels and general signal transmission.
FIG. 11 illustrates transport network architectures for 5G.
FIG. 12 shows an example of a topology in which an NCR performs transmission and reception between a base station and a UE.
FIG. 13 is a diagram comparing operations of an NCR and an existing RF repeater.
FIG. 14 illustrates the structure of NCR.
FIG. 15 illustrates an example of mapping between beam index/TCI state of NCR-Fwd and SSB.
FIG. 16 illustrates the operation method of the device in a wireless communication system.
FIG. 17 illustrates the forwarding operation method of NCR.
FIG. 18 illustrates an operation method of a base station in a wireless communication system.
FIG. 19 illustrates a wireless device applicable to this specification.
FIG. 20 illustrates an example of a structure of a signal processing module.
FIG. 21 shows another example of the structure of a signal processing module in a transmission device.
FIG. 22 illustrates an example of a wireless communication device according to an embodiment of the present disclosure.
FIG. 23 shows another example of a wireless device.
FIG. 24 shows another example of a wireless device applied to the present specification.
FIG. 25 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure may be referred to as an Evolved-UMTS Terrestrial Radio Access Network (E-UTRAN) or a Long Term Evolution (LTE)/LTE-A system, for example.

The E-UTRAN includes at least one base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal/termination (MT), a wireless device, terminal, etc. The BS is generally a fixed station that communicates with the UE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

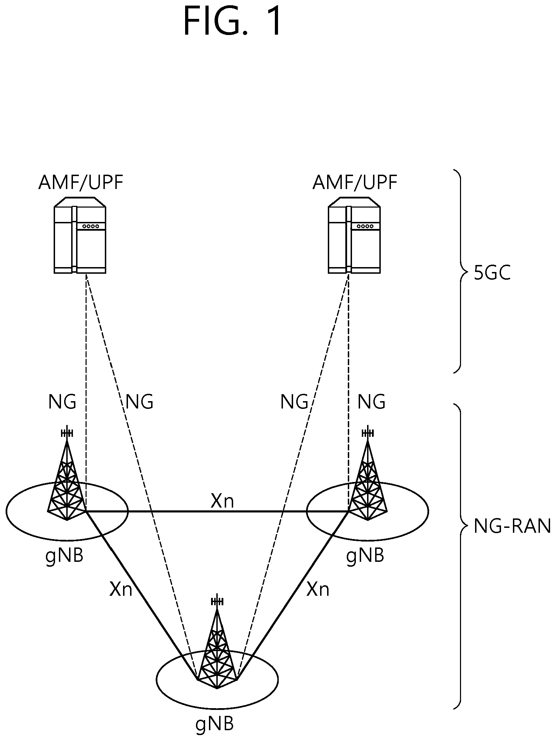

FIG. 1 illustrates a system structure of a next generation radio access network (NG-RAN) to which NR is applied.

Referring to FIG. 1, the NG-RAN may include a base station (e.g., gNB and/or an eNB) that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Meanwhile, layers of a radio interface protocol between the UE and the network may be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

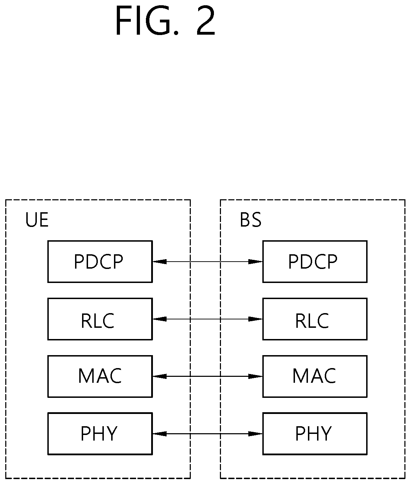

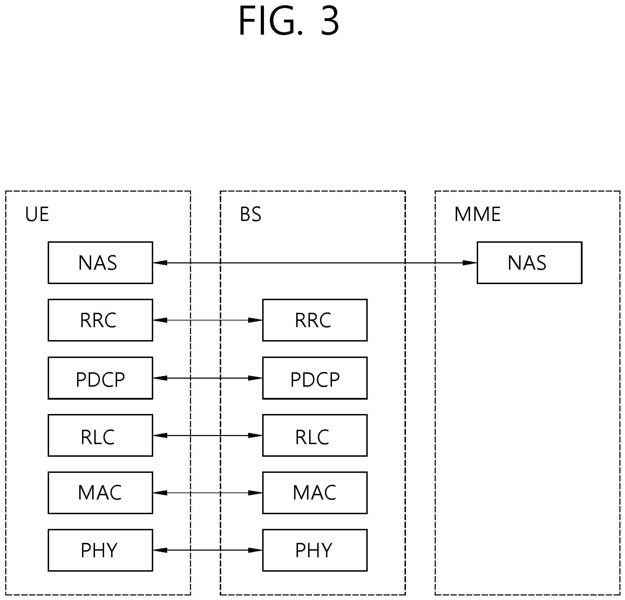

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission of subframe.

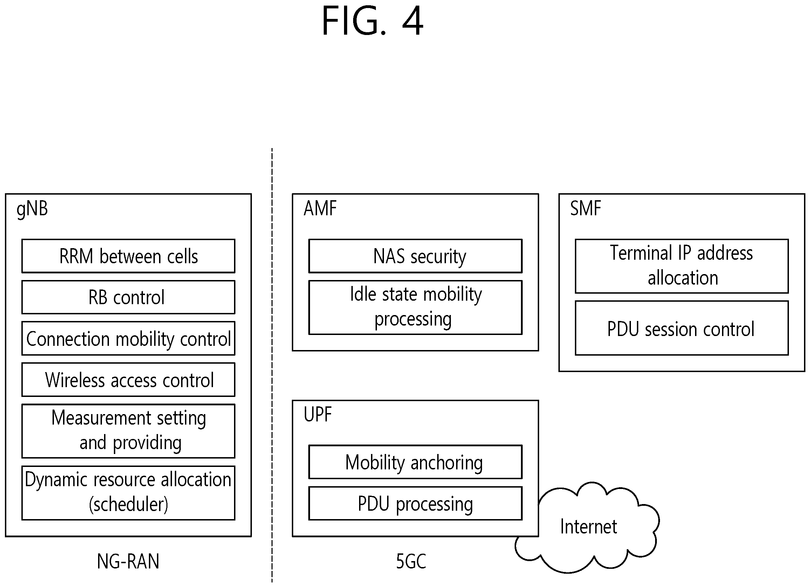

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

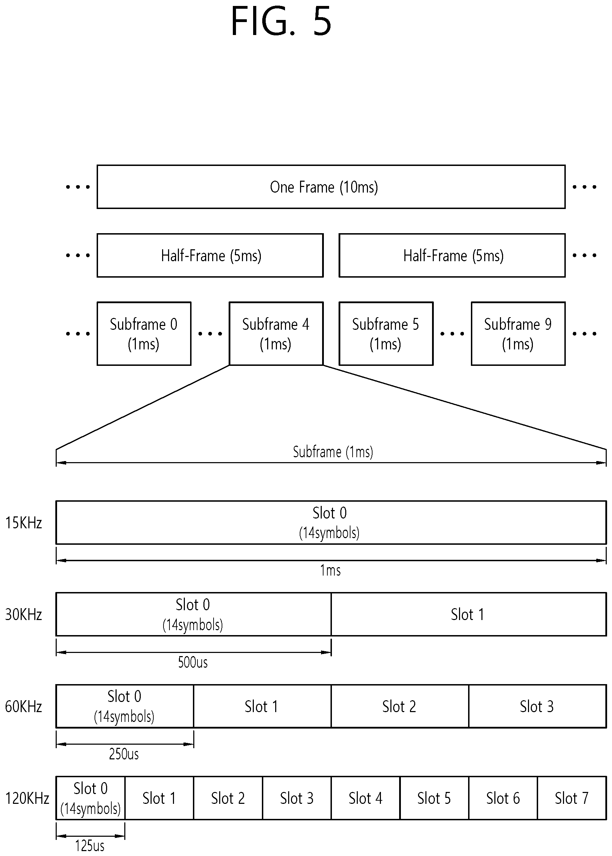

FIG. 5 illustrates an example of a frame structure that may be applied in NR.

Referring to FIG. 5, a radio frame (which may be called as a frame hereinafter) may be used for uplink and downlink transmission in NR. A frame has a length of 10 ms and may be defined as two 5 ms half-frames (Half-Frame, HF). A half-frame may be defined as five 1 ms subframes (Subframe, SF). A subframe may be divided into one or more slots, and the number of slots in a subframe depends on subcarrier spacing (SCS). Each slot includes 12 or 14 OFDM(A) symbols according to a cyclic prefix (CP). When a normal CP(=it also be called general CP or common CP) is used, each slot includes 14 symbols. When an extended CP is used, each slot includes 12 symbols. Here, the symbol may include an OFDM symbol (or a CP-OFDM symbol) and an SC-FDMA symbol (or a DFT-s-OFDM symbol).

The following table 1 illustrates a subcarrier spacing configuration µ.

**[Table 1]**

| µ | Δf = 2^{µ}·15[kHz] | Cyclic prefix |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 5, µ=0, 1, 2, and 3 are exemplified.

Table 2-1 below exemplifies that the number of symbols per slot, the number of slots per frame, and the number of slots per subframe vary according to SCS when the extended CP is used.

**[Table 2-1]**

| SCS (15·2^{µ}) | N^{slot}_{symb} | N^{frame,µ}ₛₗₒₜ | N^{subframe,u}ₛₗₒₜ |
|---|---|---|---|
| 60kHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

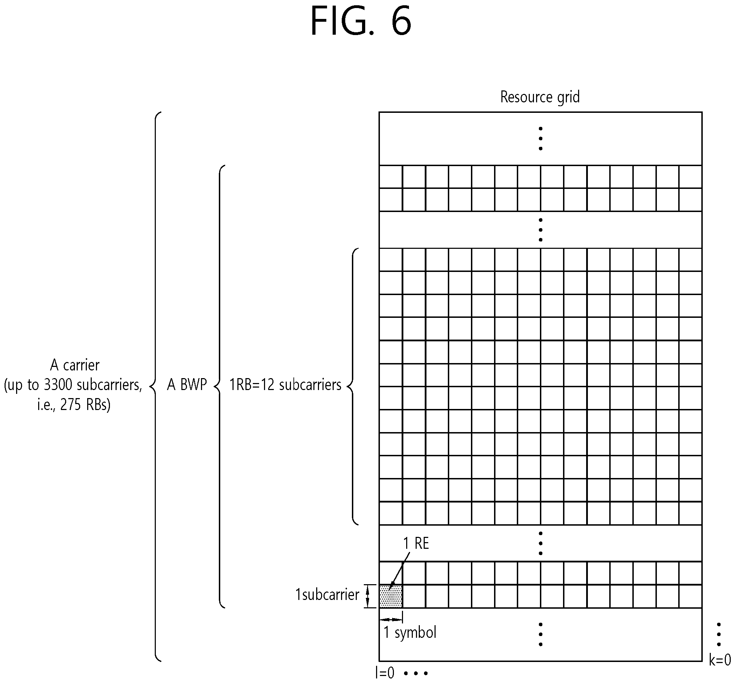

FIG. 6 illustrates a slot structure.

A slot may comprise a plurality of symbols in a time domain. For example, in case of a normal CP, one slot may include 14 symbols (or 7 symbols). However, in case of an extended CP, one slot may include 12 symbols (or 6 symbols). The carrier may include a plurality of subcarriers in a frequency domain. A resource block (RB) may be defined as a plurality of consecutive subcarriers (e.g., 12) in the frequency domain. A bandwidth part (BWP) may be defined as a plurality of consecutive (P)RBs in the frequency domain, and may correspond to one numerology (e.g., SCS, CP length, etc.). A carrier may include a maximum of N (e.g., 5) BWPs. Data communication is performed through the activated BWP, and only one BWP can be activated for one UE. Each element in the resource grid is referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring means decoding each PDCCH candidate according to a downlink control information (DCI) format. The UE monitors a set of PDCCH candidates in one or more control resource sets (CORESETs, described below) on the activated DL BWP of each activated serving cell for which PDCCH monitoring is configured according to a corresponding search space set.

A new unit called a control resource set (CORESET) may be introduced in the NR. The UE may receive a PDCCH in the CORESET.

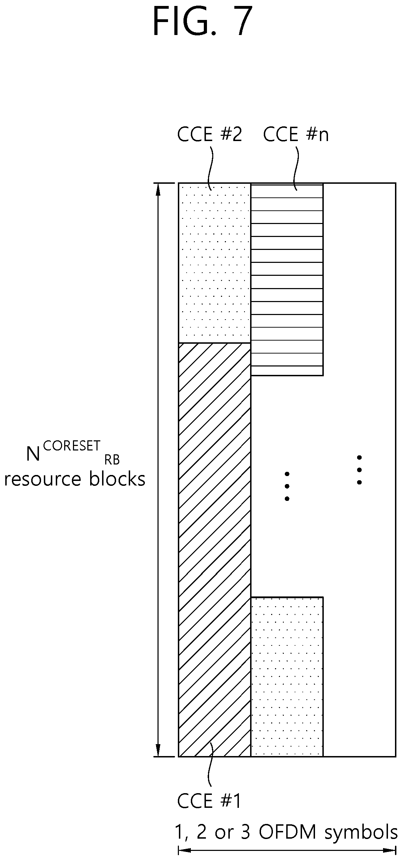

FIG. 7 illustrates a CORESET.

Referring to FIG. 7, the CORESET includes N^{CORESET}_{RB} resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As shown in FIG. 7, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the conventional wireless communication system (e.g., LTE/LTE-A) is configured over the entire system band used by a base station (BS). All the UEs, excluding some (e.g., eMTC/NB-IoT UE) supporting only a narrow band, should be able to receive wireless signals of the entire system band of the BS in order to properly receive/decode control information transmitted by the BS.

On the other hand, in NR, CORESET described above was introduced. CORESETs are radio resources for control information to be received by the UE and may use only a portion, rather than the entirety of the system bandwidth in the frequency domain. In addition, in the time domain, only some of the symbols in the slot may be used. The BS may allocate the CORESET to each UE and may transmit control information through the allocated CORESET. A UE in NR can receive control information of a base station even if it does not necessarily receive the entire system band.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

### <Self-contained subframe structure>

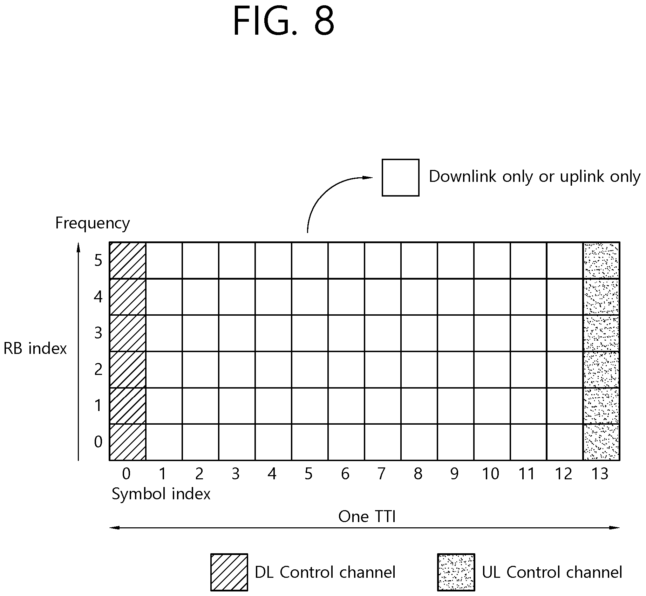

FIG. 8 shows an example of a frame structure for a new radio access technology.

In NR, as shown in FIG. 8, a structure in which a control channel and a data channel are time-division-multiplexed within one TTI can be considered as a frame structure in order to minimize latency.

In FIG. 8, a hatched area indicates a downlink control area, and a black area indicates an uplink control area. The unmarked area may be used for downlink data (DL data) transmission or uplink data (UL data) transmission. A feature of this structure is that downlink (DL) transmission and uplink (UL) transmission are sequentially performed within one subframe and thus DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

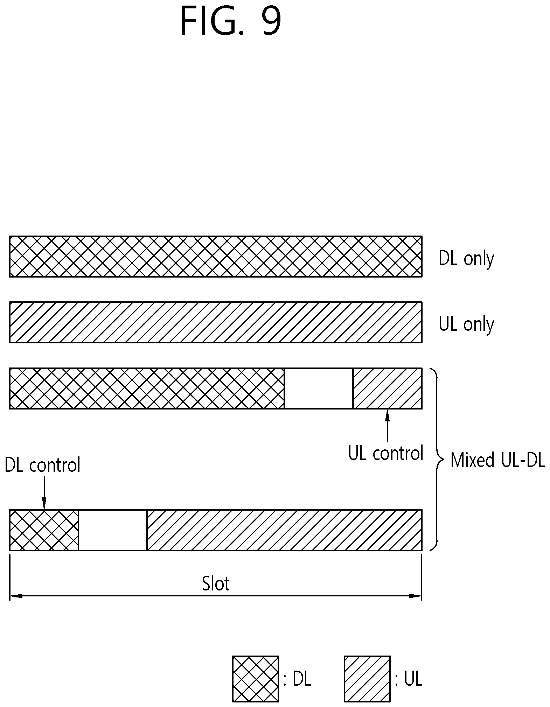

FIG. 9 illustrates a structure of self-contained slot.

In NR system, one slot includes all of a DL control channel, DL or UL data channel, UL control channel, and so on. For example, the first N symbols in a slot may be used for transmitting a DL control channel (in what follows, DL control region), and the last M symbols in the slot may be used for transmitting an UL control channel (in what follows, UL control region). N and M are each an integer of 0 or larger. A resource region located between the DL and UL control regions (in what follows, a data region) may be used for transmission of DL data or UL data. As one example, one slot may correspond to one of the following configurations. Each period is listed in the time order.
1. DL only configuration
2. UL only configuration
3. Mixed UL-DL configuration
   - DL region + GP (Guard Period) + UL control region
   - DL control region + GP + UL region
      a DL region: (i) a DL data region, (ii) DL control region plus DL data region
      a UL region: (i) an UL data region, (ii) UL data region plus UL control region.

In the DL control region, a PDCCH may be transmitted, and in the DL data region, a PDSCH may be transmitted. In the UL control region, a PUCCH may be transmitted, and in the UL data region, a PUSCH may be transmitted. In the PDCCH, Downlink Control Information (DCI), for example, DL data scheduling information or UL data scheduling information may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming), an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting method. At this time, analog beams belonging to different antenna panels within one symbol can be transmitted simultaneously, and a method of introducing a beam reference signal (BRS), which is a reference signal (RS) to which a single analog beam (corresponding to a specific antenna panel) is applied and transmitted to measure channels for each analog beam, is being discussed. The BRS may be defined for a plurality of antenna ports, and each antenna port of the BRS may correspond to a single analog beam. At this time, unlike the BRS, all analog beams in an analog beam group may be applied and transmitted so that a synchronization signal or xPBCH can be well received by any UE.

In the NR, in a time domain, a synchronization signal block (SSB, or also referred to as a synchronization signal and physical broadcast channel (SS/PBCH) block) may consist of 4 OFDM symbols indexed from 0 to 3 in an ascending order within a synchronization signal block, and a primary synchronization signal (PSS), secondary synchronization signal (SSS), and a PBCH associated with demodulation reference signal (DMRS) may be mapped to the symbols. As described above, the synchronization signal block (SSB) may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, a beam-based transmission/reception operation may be performed. When the reception performance of the current serving beam is degraded, a process of finding a new beam may be performed through a process called beam failure recovery (BFR).

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have gone through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread' |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDDCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

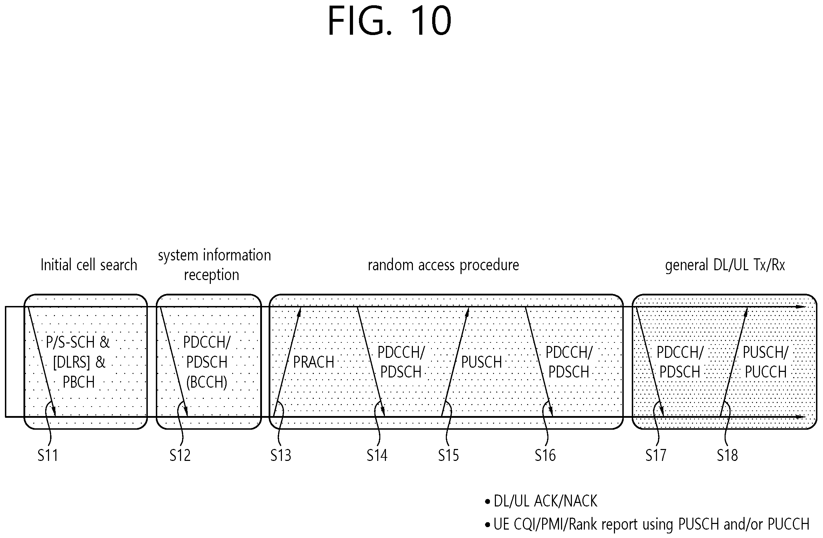

FIG. 10 illustrates physical channels and typical signal transmission.

Referring to FIG. 10, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search may be referred to as a procedure in which a UE obtains time and frequency synchronization with a cell and detects a cell ID of the cell. Cell search may be based on a primary synchronization signal and a secondary synchronization signal of the cell and the PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (This can be referred to as the process of receiving a contention resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. In the following, the proposed method is described based on the new RAT (NR) system for convenience of description, but the range of systems to which the proposed method is applied can be extended to other systems such as 3GPP LTE/LTE-A systems in addition to the NR system.

One potential technology that aims to enable future cellular network deployment scenarios and applications is support for wireless backhaul and relay links. This enables flexible and highly dense deployment of NR cells without the need to proportionally densify the transport network.

With native deployment of massive MIMO or multi-beam systems, greater bandwidth is expected to be available in NR compared to LTE (e.g., mmWave spectrum), so opportunities are created for the development and deployment of integrated access and backhaul links. This is done by establishing a number of control and data channels/procedures defined to provide connectivity or access to UEs and it allows easier deployment of a dense network of self-backhauled NR cells in a more integrated manner. These systems are referred to as integrated access and backhaul links (IAB).

The present disclosure defines the followings.
- AC(x): access link between node (x) and UE(s).
- BH(xy): Backhaul link between node (x) and node (y).

In this case, the node may mean a donor gNB (DgNB) or a relay node (RN). Here, the DgNB or donor node may be a gNB that provides a function of supporting backhaul for IAB nodes.

When relay node 1 and relay node 2 exist, if relay node 1 is connected to relay node 2 through a backhaul link and relays data transmitted to and received from relay node 2, relay node 1 is called the parent node of relay node 2, and relay node 2 is called a child node of relay node 1.

Technical features that are individually described in one drawing in this specification may be implemented individually or simultaneously.

The following drawings are made to explain a specific example of the present specification. Since the names of specific devices or names of specific signals/messages/fields described in the drawings are provided as examples, the technical features of the present specification are not limited to the specific names used in the drawings below.

Below, a network-controlled repeater (NCR) and its operation method in an NR environment are described. Hereinafter, NCR may be simply referred to as a relay or a repeater. Hereinafter, MT may be referred to as NCR-MT, and RU may be referred to as NCR-Fwd (forwarding).

### <Transport network architecture for 5G>

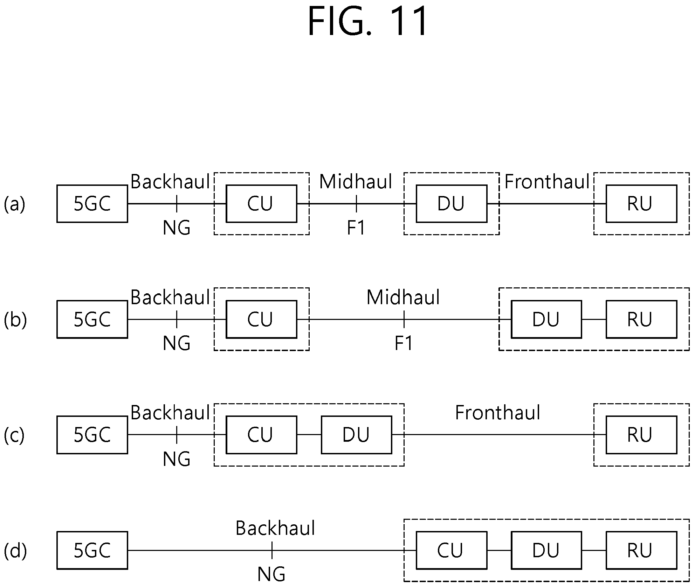

FIG. 11 illustrates transport network architectures for 5G.

ITU-T (Telecommunication Standardization Sector) adopted a transport network architecture for 5G consisting of three logical elements: CU (Centralized Unit), DU (Distributed Unit), and RU (Remote Unit), as shown in (a) of FIG. 11.

In this model, mid and lower layer functions are divided into DU and RU. The RU implements the RF function and possibly also implements the low-PHY and high-PHY functions according to the functional division between the RU and the DU. Depending on network requirements, CU, DU and RU can be grouped in different combinations to form actual physical network elements.

For example, as shown in (b) to (d) of FIG. 11, CU, DU, and RU may be grouped in various combinations. This provides flexibility to accommodate different network architectures, applications and transport network requirements.

As in FIG. 11, a transport network between 5GC and CU is called backhaul. The backhaul network implements the 3GPP NG interface. Similarly, the transmission network between CU and DU is called midhaul. The midhaul network implements the 3GPP F1 interface. Finally, the transport network between the DU and RU is called a fronthaul. Backhaul, midhaul, and fronthaul may be collectively referred to as xhaul.

Reconfgurable intelligent surface (RIS)-known also as intelligent reflecting surface (IRS), and large intelligent surface (LIS)-is a programmable structure that can be used to control the propagation of electromagnetic (EM) waves by changing the electric and magnetic properties of the surface.

RISs can be used to sense the radio environment by integrating sensing capabilities into them. By placing intelligent surfaces in the environment where wireless systems are operating, the properties of the radio channels can be controlled at least partially.

Unique capability of RIS may enable a number of benefits, including the potential for enhancing reliability and coverage performance through beamforming or range extension. The ability to control the propagation environment has somewhat changed the conventional wireless system design paradigm, where the radio channel was always seen for the most part as an uncontrollable entity that distorts the transmitted signals. Traditionally the transmitter (TX) and the receiver (RX) were designed to equalize the impact of the channel. Envisioned scenarios vary from cases where a single RIS is placed on a wall to direct signals coming from a predetermined direction.

By using RIS, it is possible to provide the 'transmission effect' of the base station signal through which external signals are transmitted into the building, and to provide the 'reflection effect' of the NLoS (non-line-of-sight) environment, thereby it can improve coverage for shaded areas.

### <Network-controlled repeater in NR>

### (1) Conventional RF repeater

A (conventional) RF repeater is a non-regenerative type of relay node that simply amplifies and forwards everything it receives. The main advantages of RF repeaters are low cost, ease of deployment and no increase in latency. The main drawback is that it can amplify the signal and noise, contributing to increased interference (contamination) of the system.

### (2) Rel-17 WI on RF repeater (RAN4)

RF repeaters are specified in Rel-17 of RAN4 for the FR1 band FDD/TDD and FR2 bands. The Rel-17 Work Item Description (WID) contains only RF requirements. Among the RAN4 WIDs, there is one that is specified as "assuming that the relay does not perform adaptive beamforming toward the UE".

### (3) Rel-18 Network controlled repeater for NR

Coverage is a fundamental aspect of cellular network deployment. Mobile operators rely on various types of network nodes to provide comprehensive coverage. Deploying regular full-stack cells is an option, but may not always be possible (e.g., if there is no backhaul availability) and may not be economically viable.

As a result, a new type of network node has been considered to increase the flexibility of mobile operators' network deployment. For example, Integrated Access and Backhaul (IAB) is a new type of network node that does not require wired backhaul, introduced in Rel-16 and improved in Rel-17. Another type of network node is an RF repeater that simply amplifies and forwards any signals it receives. RF repeaters have been widely deployed in 2G, 3G and 4G to supplement the coverage provided by regular full-stack cells.

RF repeaters provide a cost-effective means of extending network coverage, but have limitations. RF repeaters simply perform amplification and transmission tasks without considering various factors that can improve performance. The factors may include information on semi-static and/or dynamic downlink/uplink configuration, adaptive transmitter/receiver spatial beamforming, ON-OFF states, and the like.

In the network-controlled repeater (NCR), the function of receiving and processing side control information from the network is improved over the existing RF repeater. Side control information allows network controlled repeaters to perform amplification and forwarding tasks in a more efficient manner. Potential benefits may include mitigation of unwanted noise amplification, better spatial orientation transmission and reception, and simplified network integration.

Research on NCR can focus on the following scenarios and assumptions.

NCR is in-band RF repeater used to extend network coverage in the FR1 and FR2 bands, and FR2 deployments can be prioritized for both outdoor and O2I scenarios.

The NCR may be transparent to the UE.

The NCR can simultaneously maintain a base station-repeater link and a repeater-UE link.

Cost effectiveness is a key consideration for NCRs.

It is necessary to study and identify the side control information below.

Beamforming information, timing information for aligning transmission and reception boundaries of network control repeaters, UL-DL TDD configuration information, ON-OFF information for efficient interference management and energy efficiency improvement, power control information for efficient interference management, etc.

Research and identification of the L1/L2 signals (including their configurations) to convey side control information may be required. In terms of management of NCRs, it is necessary to study the identification and authentication of NCRs.

NCR may be considered to be composed of RU and MT.

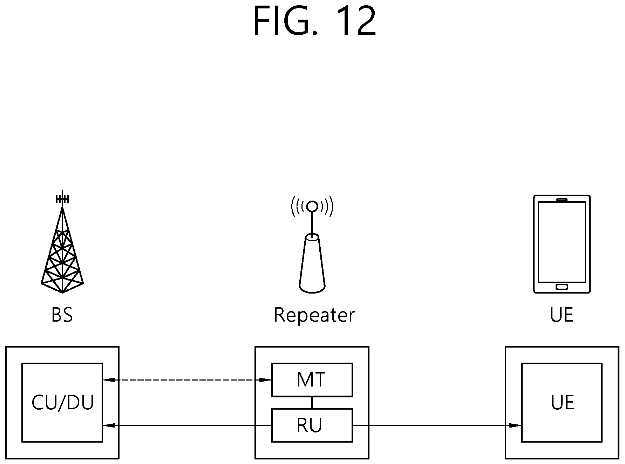

FIG. 12 shows an example of a topology in which an NCR performs transmission and reception between a base station and a UE.

Referring to FIG. 12, a CU and/or DU may exist in a base station, and an NCR may be connected to the base station. NCR may consist of MT and RU.

The RU may be composed of only the RF layer. The RU may receive a signal transmitted by the base station at the RF end and forward it to the UE, and may receive a signal transmitted by the UE at the RF end and forward the signal to the base station.

The RU only relays a signal between the base station and the UE, and cannot generate and transmit a signal/channel by itself to the base station/UE or receive and detect a signal/channel from the base station/UE.

In order to forward the received signal, the RU may consider adjusting the transmit/receive beam direction, DL/UL direction, ON/OFF status, transmission (Tx) power, etc. at the RF end. However, the operation of this RU cannot be determined by the NCR itself and can be completely controlled by the base station.

An MT may include an RF layer and L1, L2, and/or L3 layers. For example, the MT may be composed of only the RF layer and the L1 layer or the L1/L2 layer. Alternatively, the MT may be composed of an RF layer and L1/L2/L3 layers.

The MT may detect/receive a signal/channel transmitted by the base station, and the MT may generate and transmit a signal/channel transmitted to the base station. In addition, the MT may receive information (i.e., side control information) necessary for controlling the operation of the RU from the base station. The MT does not transmit/receive with the UE.

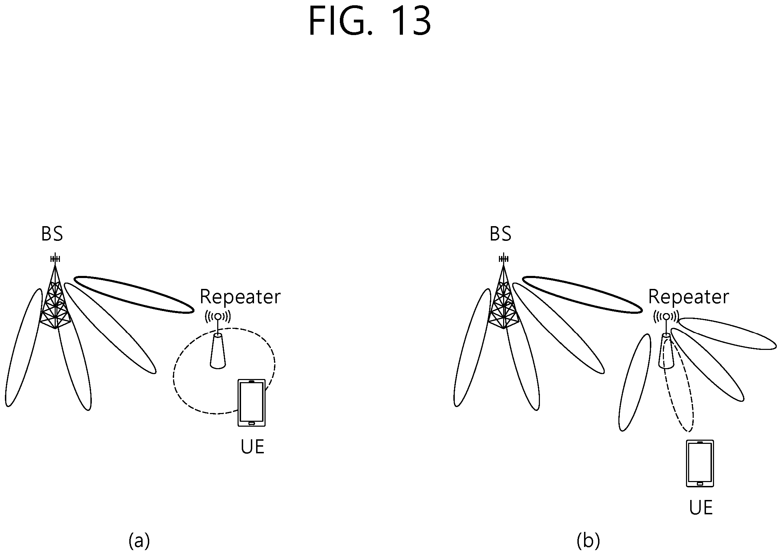

FIG. 13 is a diagram comparing operations of an NCR and an existing RF repeater.

Referring to (a) of FIG. 13, in the case of an existing RF repeater, beamforming is performed in an omni-direction or a fixed direction. On the other hand, in the NCR, a beamforming gain can be obtained by adaptively adjusting the Tx/Rx beam direction of the NCR according to the location of the UE and the channel condition of the UE as shown in (b) of FIG. 13.

In the case of existing RF repeaters, transmission and reception in DL and UL directions were always performed simultaneously because it could not distinguish between DL and UL directions in the TDD system. Alternatively, switching between the DL direction and the UL direction is performed in a predetermined time pattern by applying only a fixed TDD configuration. On the other hand, in the NCR, the NCR may perform DL/UL switching in consideration of TDD configuration. Through this, adaptive DL/UL operation is possible, and power waste and interference caused by forwarding unnecessary signals can be reduced.

In the case of an existing RF repeater, the power of a received signal is always amplified and transmitted regardless of whether a base station or a UE transmits a signal. This wastes power unnecessarily and increases interference to surroundings. In the case of NCR, unnecessary signals may not be transmitted by performing an ON/OFF operation and turning off the operation of the RU when there is no signal to be transmitted to the base station/UE.

In the case of the existing RF repeater, the power of the received signal is amplified at a fixed ratio and transmitted. In the case of NCR, when a signal is transmitted with unnecessarily large power, the effect of interference on the surroundings is reduced by reducing the transmit power of the NCR, and when a signal is transmitted with low power, the signal can be stably transmitted to the receiver by increasing the transmit power of the NCR.

In the case of the existing RF repeater, it operated without knowing the DL/UL slot boundary. On the other hand, in the case of NCR, in order to adaptively adjust beamforming, ON/OFF, DL/UL direction, Tx power, etc. as described above, the NCR needs to know the transmission/reception boundary of DL and UL. Through this, the operation of the RU may be differently applied for each unit time (e.g., slot/symbol).

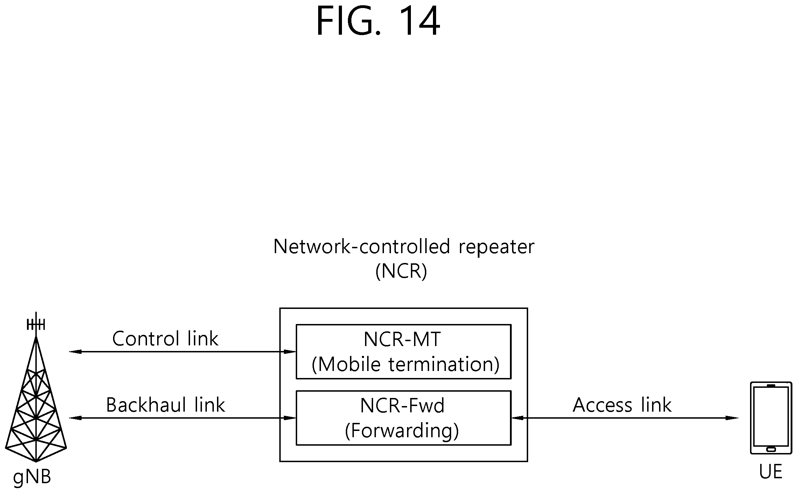

FIG. 14 illustrates a link between a base station, an NCR, and a UE.

Referring to FIG. 14, NCR may include NCR-MT(=MT) and NCR-Fwd(=RU).

An NCR-MT may be defined as a functional entity that communicates with a base station (gNB) via a control link (C-link) to enable information exchange (e.g., side control information). C-Link may be based on the NR Uu interface.

Side control information may be at least information for NCR-Fwd control.

NCR-Fwd may be defined as a functional entity that amplifies and transfers UL/DL RF signals between a base station and a UE through a backhaul link and an access link. The operation of NCR-Fwd is controlled according to the side control information received from the base station.

The contents of the present disclosure are described assuming an operation in NCR. However, the contents of the present disclosure may also be applied to non-NCR devices. For example, the contents of the present disclosure may be applied to the operation of RIS. To this end, the NCR mentioned in this disclosure may be replaced with RIS and expanded/interpreted. In this case, the RU plays a role in forwarding signals from the base station to the UE and forwarding signals from the UE to the base station in the RIS, and the MT may serve to receive side control information for controlling signal transmission of the RU from the base station.

Based on this discussion, the present disclosure proposes an association between side control information and time domain resources during NCR operation.

In the present disclosure, a network may be interpreted as being replaced with a base station or CU/DU. In addition, a base station may be interpreted as being replaced with a network, CU, or DU.

In the NCR, in order to forward the signal received by the RU, it may be considered that the RF end adjusts the transmit/receive beam direction, DL/UL direction, ON/OFF status, transmit power, and the like. However, the operation of this RU cannot be determined by the NCR itself and can be completely controlled by the base station. To this end, the MT may receive information (i.e., side control information) necessary for controlling the operation of the RU from the base station. At least some or all of this side control information may be conveyed via L1/L2 signaling such as DCI (e.g., DCI format 2_8), MAC-CE.

The side control information may include, for example, all or part of the following information.
1) Beamforming information. This may mean information about the Tx/Rx beam direction of the RU. This information may include beam directions for UL Tx to the base station, DL Rx from the base station, DL Tx to the UE, and/or UL Rx from the UE.
2) Timing information to align transmission/reception boundaries of network-controlled repeater. This may mean information for the RU to align the Tx/Rx slot or symbol boundary.
3) Information on UL-DL TDD configuration. This may mean information on the DL/UL direction of the RU.
4) ON-OFF information for efficient interference management and improved energy efficiency. This may mean information about the ON-OFF operation of the RU.
5) Power control information for efficient interference management. This may mean information on transmit power of the RU. This information may include UL transmit power to the base station and/or DL transmit power to the UE.

Side control information may be applied differently for each time resource. In this case, it is necessary to indicate side control information for each time resource.

When side control information is assumed to be transmitted through MAC-CE and/or DCI, side control information may be transmitted through different MAC-CEs and/or DCIs for each time resource unit. In this case, there is a burden of transmitting side control information for each time resource unit. Considering this, when side control information is transmitted once, side control information for a plurality of time resource units may be indicated.

Hereinafter, the present disclosure describes the operation of a network-controlled repeater (NCR) for forwarding transmissions such as SSB/CSI-RS when the NCR operates in an NR environment.

Throughout this specification, unless otherwise stated, statements using the term UE are equally applicable to NCR-MT. For example, the procedures for NCR-MT to perform cell search, system information acquisition, random access procedure, UCI reporting, or PDCCH monitoring may be identical to those for the UE. The procedure for NCR-MT to perform PDSCH reception, CSI-RS measurement and CSI determination, PUSCH transmission or SRS transmission may also be identical to the corresponding procedure for the UE.

Unlike conventional RF repeaters, NCR performs Tx/Rx beamforming to the backhaul link and/or Tx/Rx beamforming to the access link, and can (or assumes) perform beam adaptation to an appropriate beam direction among multiple beam directions. At this time, the beam direction applied when NCR-Fwd performs DL-Tx (downlink transmission) to the access link and/or the beam direction applied when UL-Rx (uplink reception) to the access link may be indicated by a base station (BS, gNB) or implicitly determined by a specific rule, etc.

The present disclosure proposes a method for determining the direction of the DL-Tx and/or the UL-Rx beam and whether to forward it, when the NCR-Fwd performs forwarding (i.e., DL-Tx) of a DL signal (of a base station) to a UE and/or reception (UL-Rx) of an UL signal from a UE over an access link for forwarding (to a base station). That is, it describes a method for determining the direction and whether to forward of a DL-Tx beam and/or a UL-Rx beam in an access link.

### <TCI status for NCR-Fwd access link>

In order for NCR-Fwd to determine the direction of the DL-Tx and/or UL-Rx beam to be applied for forwarding operation to the access link, information on the beam direction to be applied by NCR-Fwd can be configured/indicated from the base station to the NCR-MT. When the NCR-MT of the NCR receives information about the beam direction of the access link, the NCR can determine the beam direction to be applied to the access link from this and perform a forwarding operation to the access link of the NCR-Fwd in the corresponding beam direction. This beam indication is associated with a specific time resource, allowing different (independent) beam directions to be applied depending on the time resource for forwarding operations to the access link of NCR-Fwd.

In order for the base station to indicate to the NCR-MT the DL-Tx and/or UL-Rx beam directions of the access link applied to the NCR-Fwd, a value corresponding to the beam direction of the access link of the NCR-Fwd may be indicated.

A beam index or TCI state ID (identity) may be indicated for Tx beam indication of the access link of NCR-Fwd. In the present disclosure, both the beam index and the TCI state ID may be collectively referred to as the TCI state ID. That is, in the present disclosure, the TCI state ID for the access link of NCR-Fwd may mean the beam index for the access link of NCR-Fwd.

From an NCR-Fwd perspective, two transmissions on the access link at time resource t1 and time resource t2 can be indicated to have the same TCI state, i.e., the same TCI state ID value. In this case, NCR-Fwd can assume that the two transmissions of the access link at t1 and t2 are in a QCL relationship with each other. That is, NCR-Fwd should transmit so that the two transmissions of the access links at t1 and t2 have a QCL relationship with each other. At this time, being in a QCL relationship can include all or some of the following meanings.
i) Applying the same Tx beam, ii) Applying the same spatial Tx filter, iii) Applying the same spatial Tx parameters.

The TCI state ID used to indicate the beam direction of the access link of NCR-Fwd can be mapped to the transmission of a specific DL RS (downlink reference signal). A specific TCI state ID can be mapped to a specific DL RS ID. For this purpose, the following mapping relationship can be set from the base station to the NCR-MT.

Method 1. DL RS ID(s) can be set, which are mapped to each TCI state ID.

Method 2. TCI state ID(s) mapped to DL RS ID can be set.

At this time, multiple DL RS IDs may be mapped to the same TCI state ID. However, one DL RS ID may not be mapped to multiple TCI state IDs.

The above DL RS ID may mean an SS/PBCH block index (SSB index) and/or a CSI-RS index. The SSB index and the CSI-RS index may mean the index of SSB and the index of CSI-RS configured to the NCR-MT from the base station.

When a specific TCI state ID is mapped to a specific DL RS ID, NCR-Fwd may assume that transmissions on an access link applying the TCI state ID and transmissions on an access link of a DL RS for the DL RS ID are in a QCL relationship with each other. That is, NCR-Fwd should be transmitted so that transmissions to the access link applying the corresponding TCI state ID and transmissions to the access link of the DL RS for the corresponding DL RS ID have a QCL relationship with each other. For example, if NCR-Fwd is instructed to apply TCI state ID n on time resource t1, and TCI state ID n is mapped to SSB index m, NCR-Fwd should transmit in such a way that transmissions to the access link at t1 have a QCL relationship with transmissions to the access link at the time resource where SSB index m is transmitted.

For the above operation, below it is proposed a method to set the TCI states that NCR-Fwd applies for transmission to the access link.

Approach 1. TCI states for transmission to the access link of NCR-Fwd and an ID (TCI state ID) corresponding to each TCI state are set. These configurations may be set from the base station to the NCR-MT. For this purpose, the following configurations may be included specifically.
i) The number of TCI states (N_{A}) may be set. In this case, it may be determined that TCI state IDs from 0 to N_{A} exist (or it may be determined that TCI state IDs from 0 to (N_{A}-1) exist).
ii) A corresponding ID value (TCI state ID) may be set for each TCI state.
iii) A corresponding DL RS ID (SSB index and/or CSI-RS index) may be set for each TCI state.

Approach 2. The TCI states that are set for reception on the control link (C-link) of the NCR-MT may be reused for the TCI states for transmission on the access link of the NCR-Fwd. For this purpose, the TCI states set for the NCR-MT for DL-Rx from the base station may be applied for transmission on the access link of the NCR-Fwd.

The NCR-MT may be configured with the TCI states, for example, as follows. A TCI state ID (e.g., 'tci-StateId' in TCI-State IE) that is mapped to a specific TCI state and a DL RS ID (e.g., 'referenceSignal' in TCI-State IE) that is in a QCL relationship are set.

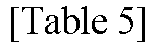

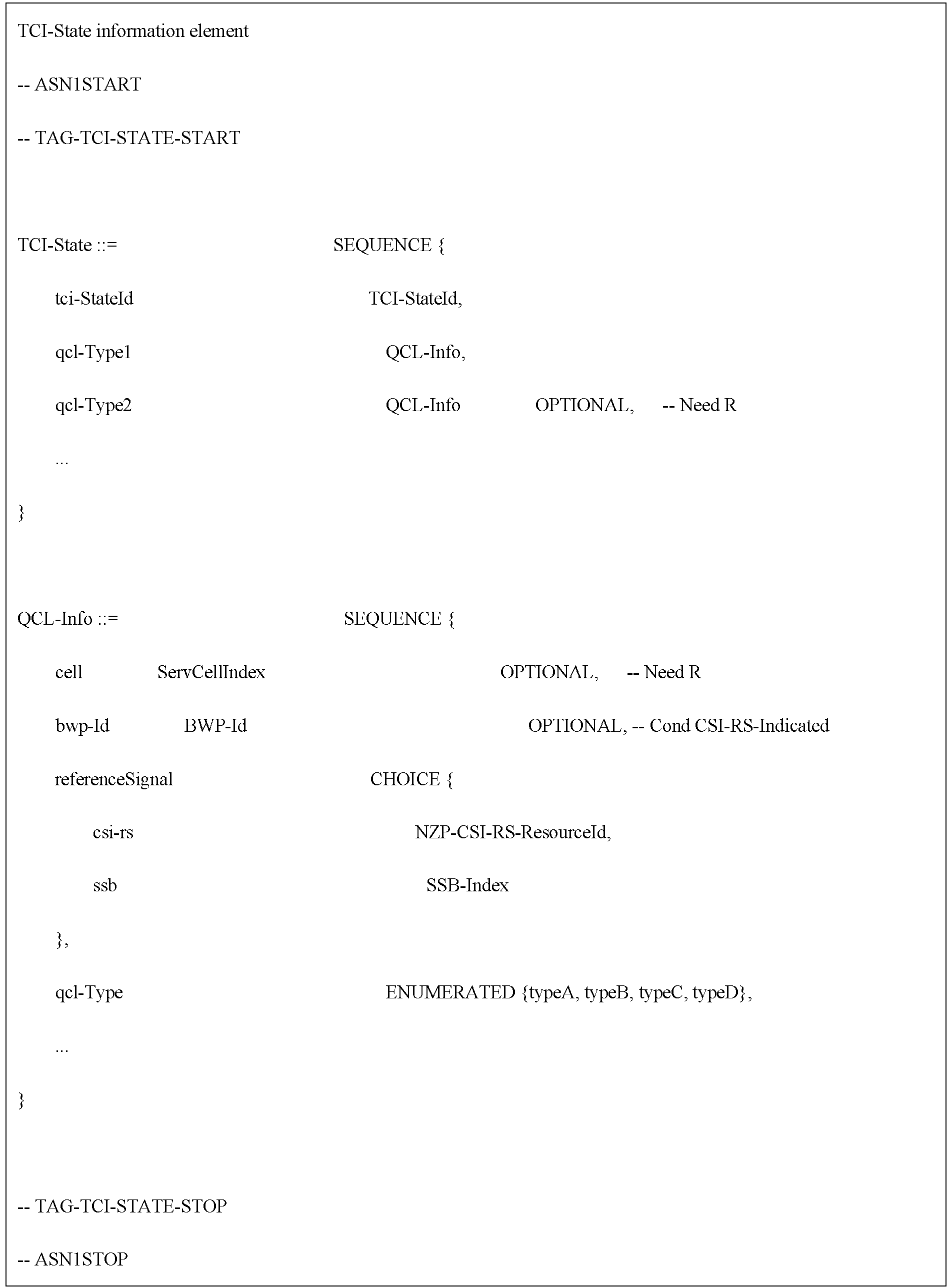

At this time, among the TCI states set to NCR-MT, the TCI state corresponding to the TCI state ID n may be set to the DL RS ID with the SSB index m. In this case, the NCR-Fwd may determine that a TCI state corresponding to TCI state ID n exists for the transmission to the access link and that the transmission to the access link with this TCI state should be transmitted such that the transmission to the access link with SSB index m has a Quasi Co Location (QCL) relationship with the transmission to the access link in the time resource from which the SSB index m is transmitted.

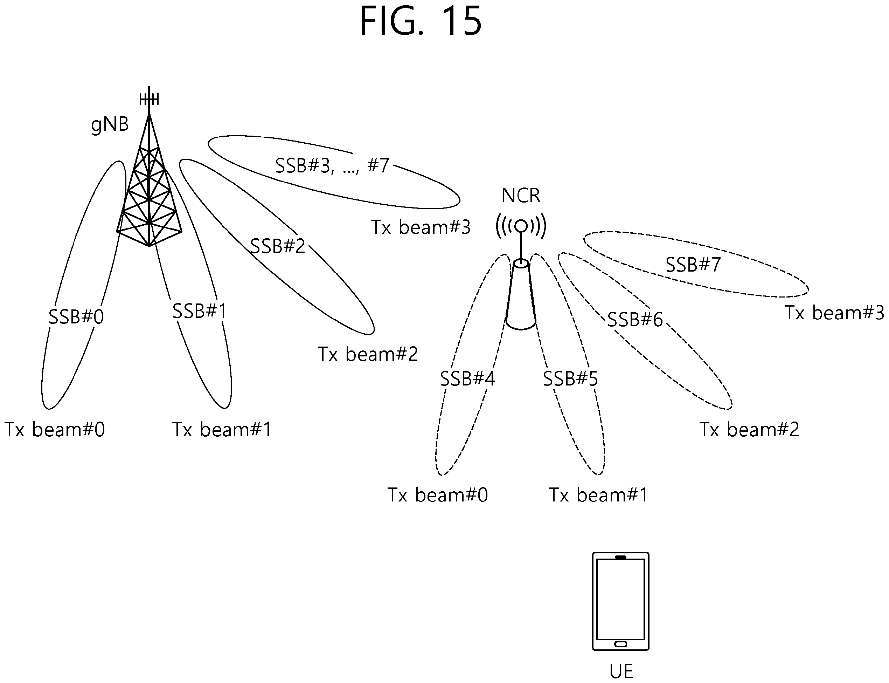

FIG. 15 shows an example of mapping between beam index/TCI state of NCR-Fwd and SSB.

In FIG. 15, it is assumed that there are SSBs with SSB indexes #0 to 7 in the cell. That is, the base station transmits SSBs for SSB indexes #0 to 7. At this time, the NCR performs transmission to the access link in four beam directions (Tx beam #0, #1, #2, #3), and the four beam directions may correspond to four TCI states, respectively. At this time, each TCI state (Tx beam) may be mapped to a specific SSB index among the SSB indexes existing in the cell.

In FIG. 15, Tx beams #0, #1, #2, and #3 of NCR are mapped to SSB#4, #5, #6, and #7, respectively. In this case, when NCR-Fwd is instructed to apply a Tx beam (TCI state) when performing transmission through an access link, NCR-Fwd may perform transmission in the direction of the applied Tx beam in the time resource for transmitting SSB for the SSB index mapped to the corresponding Tx beam (TCI state).

In this case, NCR-Fwd performs transmission in the direction of Tx beams #0, #1, #2, #3 in the time resources where SSB#4, #5, #6, #7 are transmitted. On the other hand, NCR-Fwd does not perform forwarding in the time resources where SSB#0, #1, #2, #3 are transmitted.

### <Method for determining valid TCI status(s)>

Among the TCI states for the transmission of the access link of NCR-Fwd set as above, only some of the TCI states may be valid and applicable to the actual transmission of the access link. For example, among the N TCI states set for the access link of NCR-Fwd, only M<=N TCI states are valid and may be indicated/applied as TCI states for actual transmission.

When the number of TCI states for transmission of the access link of NCR-Fwd is large, it is helpful in terms of transmission flexibility of the access link of NCR-Fwd, but there is a disadvantage in that the overhead (e.g., number of bits) for indicating the TCI state to be actually applied increases. Taking this into account, TCI states may be preset and only some of them may be used for actual beam direction.

Alternatively, if the TCI states set for the NCR-MT are reused for the TCI states for the transmission of the access link of the NCR-Fwd as in approach 2 above, only some of the TCI states set for the NCR-MT may be used as the TCI states for the actual transmission of the access link of the NCR-Fwd.

That is, among the TCI states for transmission on the access link of NCR-Fwd, some TCI states are determined as valid TCI states, and a specific valid TCI state may be applied for transmission on the access link of NCR-Fwd at a specific time resource.

NCR-Fwd may determine valid TCI states among the TCI states for transmission on the access link as follows.

Alt 1. NCR-Fwd may be explicitly configured with TCI states that are valid TCI states among the TCI states configured for transmission on the access link. At this time, the TCI state for transmission on the access link may be set/determined as in Approach 1 and/or Approach 2. The configurations for these valid TCI states may be set to the NCR-MT from the base station through signaling such as RRC, MAC-CE, etc.

Alt 2. Among the TCI states for transmission on the access link configured to NCR-Fwd, DL RS may be mapped only to some TCI states. In this case, a TCI state in which a mapped DL RS ID exists may be determined as a valid TCI state.

Alt 3. NCR-Fwd may perform DL RS forwarding only for some DL RS IDs. In this case, whether or not to perform NCR-Fwd forwarding may be set or determined for each DL RS ID. In this case, the NCR-Fwd may determine that the TCI state to which the DL RS ID that the NCR-Fwd performs forwarding is mapped is a valid TCI state, and the TCI state to which the DL RS ID that the NCR-Fwd does not perform forwarding is not a valid TCI state.

### <Forwarding operation for SSB/CSI-RS resources>

Below, it is proposed a method for determining a transmission beam in an access link of NCR-Fwd and a method for determining whether to forward in DL RS transmission resources such as SSB/CSI-RS.

NCR-MT may be configured with information about SSB (SS/PBCH block) (e.g., information about SSB symbol) from the base station. For example, this configuration may be set via ssb-PositionsInBurst in SIB1 or ssb-PositionsInBurst in ServingCellConfigCommon. Through this, the NCR-MT may determine the symbol resource (time resource) in which the SSB is transmitted per SSB index.

And, the NCR-MT may be configured with information about CSI-RS symbols from the base station. Through this, the NCR-MT may determine the symbol resources for which CSI-RS is transmitted per CSI-RS index. These CSI-RSs may be limited to periodic CSI-RSs or periodic NZP-CSI-RSs. These configurations may be set, for example, by 'NZP-CSI-RS-Resource'.

In this disclosure, for convenience of explanation, the forwarding operation of SSB of NCR-Fwd is described, but the contents of this disclosure may also be applied to the forwarding operation of CSI-RS of NCR-Fwd.

In the example of FIG. 15, the base station may transmit SSB transmissions for SSB indexes #0, #1, #2, and #3 in different beam directions for each index. NCR-MT may perform reception by applying different DL Rx beams to receive SSB for SSB indexes #0, #1, #2, and #3. When the NCR-MT receives SSBs for SSB indexes #0, #1, #2, #3 and reports the SSB index(es) and measurement value(s) with a good value for the measurement (e.g., L1-RSRP), the base station may transmit a DL signal for that NCR-MT in the beam direction that transmitted the SSB with the good measurement result. For example, if the measurement value for SSB index #3 is the best, the base station may perform downlink transmission to NCR-MT in the beam direction used when transmitting SSB index #3. And, to receive this, NCR-MT may perform downlink reception using the best DL Rx beam when receiving SSB index #3.

NCR-Fwd may receive SSB for SSB index #4, #5, #6, and #7 from the base station and transmit the SSB through the access link in different Tx beam directions according to the index. At this time, the base station may transmit SSB for SSB index #4, #5, #6, #7 in the beam direction that NCR-MT can best receive. If the NCR-MT reports SSB index #3 as having the best measurement result among SSB indexes #0, #1, #2, and #3, the base station may apply the Tx beam direction applied when transmitting SSB index #3 to perform SSB transmission for SSB indexes #4, #5, #6, and #7.

Considering the above operation, when the base station transmits SSBs corresponding to N SSB indexes, the NCR may not forward all SSB transmissions. In order to perform measurements independently for transmissions on the base station's direct link and on forwarded links forwarded by the NCR, the NCR may forward only some SSB transmissions and not forward some SSB transmissions.

For example, in FIG. 15, the base station transmits SSBs for SSB indexes #0, #1, ... #7, but NCR-Fwd may perform forwarding only in the time resources in which SSBs for SSB indexes #4, #5, #6, and #7 are transmitted. Through this, the UE can determine the strength/quality of the received signal for a signal transmitted directly from the base station through SSB indexes #0, #1, #2, #3, and can determine the strength/quality of the received signal for a signal forwarded and transmitted from the NCR through SSB indexes #4, #5, #6, #7.

### <Method for determining beam direction in access link in SSB/CSI-RS transmission resources>

Below, it is proposed a method for NCR-Fwd to determine beam direction in an access link in the time resource where SSB is forwarded.

Method 1. Method of transmitting using the TCI state to which the SSB index is mapped.

DL RS ID (e.g., SSB index) may be mapped to each TCI state set for transmission on the access link of NCR-Fwd. For example, SSB index #m may be mapped to TCI state ID #n. In such a case, NCR-Fwd may perform transmission on the access link by aligning with (using) the TCI state corresponding to TCI state #n in the time resource where SSB for SSB index #m is transmitted.

At this time, the time resource through which SSB is transmitted may mean the symbol resource through which SSB is transmitted. That is, NCR-Fwd may perform transmission on an access link in accordance with the TCI state corresponding to TCI state ID #n in the symbol resource where SSB for SSB index #m is transmitted.

Alternatively, the time resource in which SSB is transmitted may mean a slot resource that includes a symbol resource in which SSB is transmitted. That is, NCR-Fwd may perform transmission on an access link in accordance with the TCI state corresponding to TCI state ID #n in a slot resource containing a symbol resource where SSB for SSB index #m is transmitted.

Method 2. A method for indicating a beam direction per SSB index.

NCR may be configured with information about beam direction in access link applied by SSB index transmitted from cell. This configuration information may be configured to the NCR-MT from base station through signaling such as RRC/MAC-CE.

For example, information about the beam index applied to each SSB index may be indicated.

At this time, if SSB index #m is mapped to beam index #n, NCR-Fwd may perform transmission on the access link in accordance with beam index #n in the time resource in which SSB for SSB index #m is transmitted.

At this time, the time resource through which SSB is transmitted may mean the symbol resource through which SSB is transmitted. That is, NCR-Fwd may perform transmission on an access link in accordance with beam index #n in symbol resources where SSB for SSB index #m is transmitted.

Alternatively, the time resource in which SSB is transmitted may mean a slot resource that includes a symbol resource in which SSB is transmitted. That is, NCR-Fwd may perform transmission on an access link in accordance with beam index #n in slot resources that include symbol resources where SSB for SSB index #m is transmitted.

### <Method for determining whether to forward in SSB/CSI-RS transmission resources>

In the following, it is proposed a method for determining an SSB on which NCR-Fwd performs a forwarding operation. That is, it is proposed a method for determining whether NCR-Fwd performs a forwarding operation on a time resource on which an SSB is transmitted.

In order for NCR-Fwd to determine whether forwarding operation is performed in the time resource where SSB is transmitted, NCR-Fwd may determine whether forwarding operation is performed per SSB index as follows.

Method 1. NCR-MT is configured with information, from the base station, on whether to forward per SSB index.

For example, when the NCR-MT is configured with information about the SSB transmission resources in a cell (e.g., ssb-PositionsInBurst), it may be configured with information about whether to forward together. Alternatively, the information about whether to forward may be set independently for each SSB index.

Or, for example, when NCR-MT is configured with information about SSB transmission resources in a cell (e.g., ssb-PositionsInBurst), it is configured together with information about whether the corresponding SSB/CSI-RS is set for NCR-MT operation or NCR-Fwd operation. Or, independently, it is set for each SSB index whether the corresponding SSB is set for NCR-MT operation or NCR-Fwd operation.

If set to SSB/CSI-RS for NCR-Fwd, NCR-Fwd determines the corresponding SSB/CSI-RS index to be the SSB/CSI-RS index performing the forwarding.

If set to SSB/CSI-RS for NCR-MT, NCR-Fwd determines that SSB/CSI-RS index to be an SSB/CSI-RS index that does not perform forwarding.

If it is set as the SSB for both NCR-MT and NCR-Fwd, NCR-Fwd determines that SSB/CSI-RS index to be the SSB/CSI-RS index that performs the forwarding.

Method 2. The NCR-MT is configured with information, from the base station, about the SSB/CSI-RS indexes that perform forwarding.

For example, NCR-MT is configured with a list of SSB indexes that perform (or do not perform) forwarding.

Or, for example, NCR-MT is set with a list of SSB indexes for the operation of NCR-MT and/or a list of SSB indexes for the operation of NCR-Fwd.

At this time, i) for the SSB index set as the SSB for NCR-Fwd, NCR-Fwd determines the SSB index as the SSB index performing forwarding.

ii) For the SSB index set as SSB for NCR-MT, NCR-Fwd determines the SSB index as an SSB index that does not perform forwarding.

iii) For the SSB index set to SSB/CSI-RS for both NCR-MT and NCR-Fwd, NCR-Fwd determines the SSB index as the SSB index to perform forwarding.

Method 3. Determine whether to forward based on whether the SSB index is mapped to the TCI status.

DL RS ID (e.g., SSB index) may be mapped to each TCI state set for transmission on the access link of NCR-Fwd. If a specific SSB index is mapped to a specific TCI state, NCR-Fwd considers the SSB index as an SSB index that performs forwarding. Otherwise, it considers the SSB index as an SSB index that does not perform forwarding.

For valid TCI states set for transmission on the access link of NCR-Fwd, the SSB index mapped to the valid TCI state is determined as the SSB index that performs forwarding. The SSB index that is not mapped to the valid TCI state is determined as the SSB index that does not perform forwarding.

When the beam index applied by NCF-Fwd is set for each SSB index, the SSB index indicated with information about the beam index is determined as the SSB index that performs forwarding. The SSB index for which the beam index is not indicated is determined as the SSB index that does not perform forwarding.

NCR-Fwd performs forwarding in the time resources where the SSB corresponding to the SSB index determined to perform forwarding is transmitted. Additionally, NCR-Fwd does not perform forwarding in the time resources where the SSB corresponding to the SSB index determined not to perform forwarding is transmitted.

At this time, the time resource in which SSB is transmitted may mean the OFDM symbol(s) resource in which SSB is transmitted. That is, NCR-Fwd performs forwarding in the symbol(s) resource in which SSB corresponding to the SSB index determined to perform forwarding is transmitted. Additionally, NCR-Fwd may not perform forwarding on symbol(s) resources where SSBs corresponding to SSB indexes that are determined not to perform forwarding are transmitted.

Alternatively, the time resource in which SSB is transmitted may mean the slot(s) resource including the OFDM symbol(s) resource in which SSB is transmitted. That is, NCR-Fwd performs forwarding in the slot(s) resource including the symbol(s) resource in which SSB corresponding to the SSB index determined to perform forwarding is transmitted. Additionally, NCR-Fwd may not perform forwarding in slot(s) resources that contain symbol(s) resources in which SSB corresponding to SSB index that is determined not to perform forwarding are transmitted. If a slot contains both symbols for SSBs that perform forwarding and symbols for SSBs that do not perform forwarding, NCR-Fwd may perform forwarding in that slot.

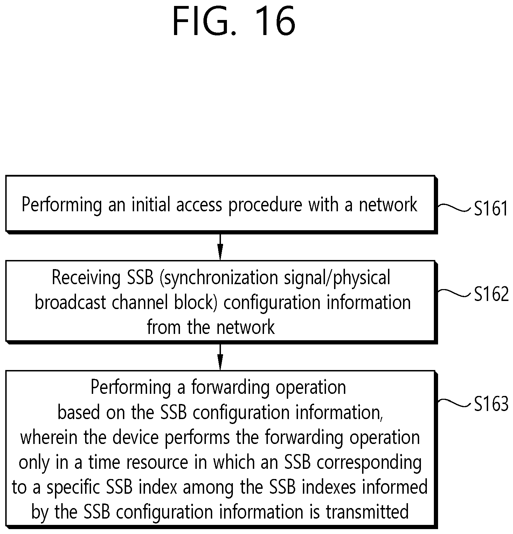

FIG. 16 illustrates a method of operation of a device in a wireless communication system.

Referring to FIG. 16, the device performs an initial access procedure with a network (e.g., a base station) (S161). The initial access procedure may be, for example, at least some of the procedures described in FIG. 10.

The device receives SSB (synchronization signal/physical broadcast channel block) configuration information from the network (S162).

The device performs a forwarding operation based on the SSB configuration information, wherein the device performs the forwarding operation only in a time resource in which an SSB corresponding to a specific SSB index among the SSB indexes informed by the SSB configuration information is transmitted (S163).

The above device may be an NCR. In this case, the NCR includes an NCR (network-controlled repeater)-MT (mobile termination) entity and an NCR-Fwd (Forwarding) entity.

The NCR-Fwd may transmit or receive only after the NCR-MT receives on the control link an indication for one or more beams for the NCR-Fwd to use for transmissions or receptions over corresponding one or more time resources on the access link.

When the NCR-MT performs a link recovery procedure, the NCR-Fwd does not transmit or receive until the link recovery procedure is complete.

NCR may receive TDD UL-DL configuration (e.g., 'tdd-UL-DL-ConfigurationCommon' and/or 'tdd-UL-DL-ConfigurationDedicated') from the network via NCR-MT.

The NCR-Fwd i) receives on the backhaul link or ii) transmits on the access link only in symbols indicated as downlink by TDD UL-DL configuration.

The NCR-Fwd i) receives on the access link or ii) transmits on the backhaul link only in symbols indicated as uplink by TDD UL-DL configuration.

When the NCR simultaneously receives via both the control link and the backhaul link in a set of symbols, a TCI state for receptions on the backhaul link is same as a TCI state for receptions on the control link in the set of symbols. When the NCR simultaneously transmits via both the control link and the backhaul link in a set of symbols, a spatial filter for transmissions on the backhaul link is same as a spatial filter for transmissions on the control link in the set of symbols.

When the NCR does not simultaneously receive on the control link and the backhaul link, it may behave as follows.
i) If the NCR does not support determination of a TCI state for receptions on the backhaul link based on an indication of a TCI state by the serving cell, or if the NCR does not receive an indication of a TCI state, for receptions on the backhaul link, 1) if the NCR does not receive an indication of a unified TCI state for receptions by the NCR-MT, receptions on the backhaul link use same QCL parameters as the ones for PDCCH receptions in a CORESET with the lowest ID, 2) else, receptions on the backhaul link use the QCL parameters provided by an indicated unified TCI state for receptions by the NCR-MT.
ii) Else, receptions on the backhaul link use QCL parameters provided by a TCI state in a MAC CE.

When the NCR does not simultaneously transmit on the control link and the backhaul link, it may behave as follows.
i) If the NCR does not support determination of a spatial filter for transmissions on the backhaul link based on an indication of a unified TCI state or SRI by the serving cell, or if the NCR-MT does not receive an indication of a unified TCI state or SRI for determining a spatial filter, for transmissions on the backhaul link, 1) if the NCR does not receive an indication of a unified TCI state for transmissions by the NCR-MT, transmissions on the backhaul link use a same spatial filter as the one associated with the PUCCH resource with the smallest PUCCH resource ID in PUCCH resource set, 2) else, transmissions on the backhaul link use a spatial filter corresponding to an indicated unified TCI state for transmissions by the NCR-MT.
ii) Else, transmissions on the backhaul link use a spatial filter corresponding to a unified TCI state or SRI provided by a MAC CE

The NCR-Fwd uses a same beam for transmissions and receptions on the access link during respective time resources associated with the beam.

The NCR may be provided a list of sets of resources for transmissions or receptions on the access link. A set of resources, from the list of sets of resources, is provided by periodic forwarding resource set and occurs with a specific periodicity.

A resource from the set of resources is provided by a pair of i) a time resource and ii) a beam with an index.

The time resource starts at a slot that is offset by indicated slots from the start of the period for the set of resources and at a symbol that is offset by indicated symbols from the start of the slot, and has an indicated/configured duration for an indicated SCS.

The NCR may be provided with a list of resource sets for transmission or reception on an access link by an RRC message, and the MAC CE command may indicate a resource set among the resource sets in the list that the NCR will use or stop using.

The NCR-MT may be configured to monitor PDCCH according to USS sets for detection of a DCI format 2_8 with CRC scrambled by an NCR-RNTI. A time resource and a corresponding beam index for transmissions or receptions on the access link are indicated by corresponding fields in DCI format 2_8.

DCI format 2_8 is a DCI format which is used for notifying the aperiodic beam indication and associated time resources, and is a DCI format with a CRC scrambled by NCR-RNTI.

DCI format 2_8 may include N beam indexes and N time resource indications. The N beam indexes are sequentially associated with the N time resource indications in a one-to-one mapping. N is configured by a higher layer parameter. The size of DCI format 2_8 may be up to 128 bits.

When the NCR detects more than one DCI formats 2_8 that indicate beam indexes for time resources overlapping in a set of symbols, the NCR uses for the set of symbols a beam index that is indicated by a DCI format 2_8 that the NCR-MT detects in a most recent PDCCH monitoring.

If a first time resource included in a semi persistent forwarding resource set is indicated by a MAC CE command and is associated with a first beam index, and a second time resource included in a periodic forwarding resource set is provided and is associated with a second beam index, and the first time resource overlaps with the second time resource in a set of symbols, the NCR applies the first beam index for transmissions or receptions on the access link in the set of symbols.

If a first time resource is included in a periodic forwarding resource set or a persistent forwarding resource set and is associated with a first beam index, and a second time resource is indicated by DCI format 2_8 and is associated with a second beam index provided by the DCI format 2_8, and the first time resource overlaps with the second time resource in a set of symbols, the NCR applies, for transmissions or receptions on the access link in the set of symbols, i) the first beam index, if the periodic forwarding resource set or the persistent forwarding resource set includes a priority flag (priorityFlag), and ii) the second beam index, if the periodic forwarding resource set or the persistent forwarding resource set does not include a priority flag (priorityFlag).

The NCR does not expect overlapping time resources provided by either the periodic forwarding resource set or the persistent forwarding resource set to be associated with different beam indexes.

A transmission configuration indicator (TCI) state may be configured for transmission on an access link of NCR-Fwd. At this time, NCR-Fwd may determine that an SSB index mapped to the TCI state is an SSB index that performs a forwarding operation. NCR-Fwd may determine that an SSB index not mapped to the TCI state is an SSB index that does not perform a forwarding operation.

In some embodiments, the SSB configuration information may include a list of SSB indexes for which the device performs forwarding operations. In this case, the specific SSB index may be an SSB index included in the list.

In some embodiments, the TCI state may be a valid TCI state.

The NCR-Fwd may determine that the SSB index to which the beam index applied by the NCR-Fwd is indicated is the SSB index to which the forwarding operation is performed among the SSB indexes informed by the above SSB configuration information.

The NCR-Fwd may determine that the SSB index to which the beam index applied by the NCR-Fwd is not indicated is an SSB index to which the NCR-Fwd does not perform a forwarding operation among the SSB indexes informed by the above SSB configuration information,

The NCR-MT may receive a first list of first SSB indexes for operation of the NCR-MT and a second list of second SSB indexes for operation of the NCR-Fwd.

In this case, i) NCR-Fwd may determine that each SSB index included in the second list is an SSB index that performs a forwarding operation. In addition, ii) NCR-Fwd may determine that each SSB index included in the first list is an SSB index that does not perform a forwarding operation. iii) NCR-Fwd may determine that the SSB index included in both the first list and the second list is an SSB index that performs the forwarding operation of the NCR-Fwd.

In some embodiments, the SSB configuration information may inform a beam ID (identity) or TCI state associated with each SSB index. In this case, NCR-Fwd may perform a forwarding operation of an access link by using a beam determined based on the beam ID or TCI state associated with the specific SSB index in a time resource in which an SSB having the specific SSB index is transmitted.

According to this method, even when the NCR is located within the coverage area of the base station, the UE can directly receive and measure essential signals transmitted by the base station as needed. In addition, the signaling overhead in controlling the forwarding operation of the NCR can be reduced.

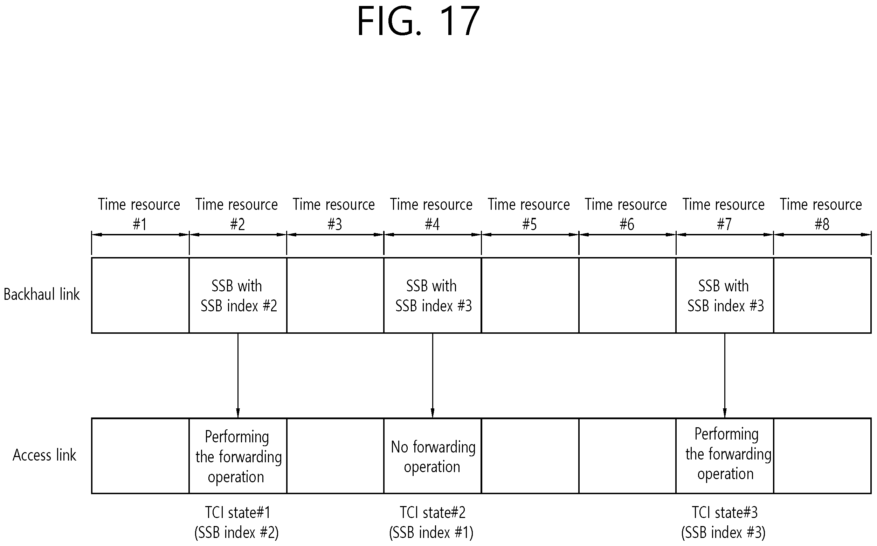

FIG. 17 illustrates the forwarding operation method of NCR.

Referring to FIG. 17, a TCI state may be set for transmission on an access link of NCR-Fwd.

For example, TCI state #1 may be set for time resource #2 of an access link, TCI state #2 may be set for time resource #4, and TCI state #3 may be set for time resource #7. At this time, a DL RS ID (e.g., SSB index) may be mapped to each TCI state. For example, let's assume that SSB index #2 is mapped to TCI state #1, SSB index #1 is mapped to TCI state #2, and SSB index #3 is mapped to TCI state #3.

In this way, if the SSB index is mapped to a TCI state, NCR-Fwd determines the SSB index as an SSB index that performs forwarding. Otherwise, that is, if the SSB index is not mapped to a TCI state, it determines the SSB index as an SSB index that does not perform forwarding.

For example, in time resource #2 of the access link, SSB index #2 mapped to TCI state #1 is determined to be an SSB index that performs forwarding, and other SSB indexes are determined to be SSB indexes that do not perform forwarding. In time resource #4 of the access link, SSB index #1 mapped to TCI state #2 is determined to be an SSB index that performs forwarding, and other SSB indexes are determined to be SSB indexes that do not perform forwarding. In time resource #7 of the access link, SSB index #3 mapped to TCI state #3 is determined to be an SSB index that performs forwarding, and other SSB indexes are determined to be SSB indexes that do not perform forwarding.

In this case, if the base station sequentially transmits SSB with SSB index #2, SSB with SSB index #3, and SSB with SSB index #3 on time resources #2, #4, and #7 of the backhaul link, NCR (specifically, NCR-Fwd) performs forwarding operation on time resources #2 and #7 of the access link, and does not perform forwarding operation on time resource #4.

In some embodiments, for valid TCI states set for transmission on the access link of NCR-Fwd, an SSB index mapped to the valid TCI state may be determined as an SSB index that performs forwarding. An SSB index that is not mapped to a valid TCI state is determined as an SSB index that does not perform forwarding.

In an embodiment, when a beam index applied by NCF-Fwd is set for each SSB index, an SSB index indicated with information about the beam index is determined as an SSB index that performs forwarding. An SSB index for which a beam index is not indicated is determined as an SSB index that does not perform forwarding.

NCR-Fwd performs forwarding in the time resources where an SSB corresponding to an SSB index determined to perform forwarding is transmitted. NCR-Fwd does not perform forwarding in the time resources where an SSB corresponding to an SSB index determined not to perform forwarding is transmitted.

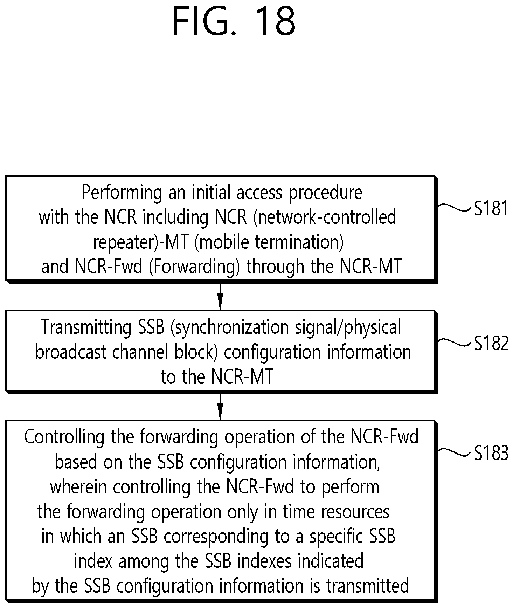

FIG. 18 illustrates an operation method of a base station in a wireless communication system.

Referring to FIG. 18, the base station performs an initial access procedure with the NCR through the NCR-MT of the NCR, which includes NCR (network-controlled repeater)-MT (mobile termination) and NCR-Fwd (Forwarding) (S181). The initial access procedure may be, for example, by at least some of the procedures described in FIG. 10.

The base station transmits SSB (synchronization signal/physical broadcast channel block) configuration information to the NCR-MT (S182).

The base station controls the forwarding operation of the NCR-Fwd based on the SSB configuration information, and controls the NCR-Fwd to perform the forwarding operation only in time resources in which an SSB corresponding to a specific SSB index among the SSB indexes indicated by the SSB configuration information is transmitted (S183).

Below, UL Tx beam adaptation in PRACH resources for NCR is described.

Unlike conventional RF repeaters, NCR performs Tx/Rx beamforming to the backhaul link and/or Tx/Rx beamforming on the access link, and can (or assumes) perform beam adaptation to an appropriate beam direction among multiple beam directions.

At this time, the beam direction applied when NCR-Fwd performs DL-Tx (downlink transmission) on the access link and/or the beam direction applied when performing UL-Rx (uplink reception) on the access link may be indicated by the base station or implicitly determined by a specific rule.

The beam direction applied when NCR-Fwd performs DL-Rx (downlink reception) to the backhaul link and/or the beam direction applied when performing UL-Tx (uplink transmission) to the backhaul link may be determined as follows.

When NCR-Fwd performs DL-Rx and/or UL-Tx to the backhaul link at a specific time resource, the TCI state applied by NCR-MT for the control link (C-link) at that time resource is applied as is for the operation of NCR-Fwd to the backhaul link. That is, the beam direction applied by NCR-MT for the control link is applied as is to the backhaul link of NCR-Fwd.

When NCR-Fwd performs DL-Rx and/or UL-Tx to the backhaul link at a specific time resource, among the TCI states set by the base station for the NCR-MT operation to the control link, a specific TCI state is applied for operation of NCR-Fwd to the backhaul link. In this case, among the TCI states set by the base station for NCR-MT operation as a control link, the TCI state that NCR-Fwd applies for operation to the backhaul link may be explicitly instructed by the base station or implicitly determined by certain conditions/rules, etc.

The NCR-MT may be configured with information about the SSB (SS/PBCH block) symbols from the base station. Specifically, these configuration may be set via 'ssb-PositionsInBurst' in SIB1 or 'ssb-PositionsInBurst' in ServingCellConfigCommon. Through this, the NCR-MT may determine the symbol resource from which an SSB is transmitted per SSB index. In addition, the NCR-MT may be configured with information about CSI-RS symbols from the base station. Through this, the NCR-MT may determine the symbol resources on which CSI-RS is transmitted per CSI-RS index. These CSI-RS may be limited to periodic CSI-RS or periodic NZP-CSI-RS. Specifically, these configurations may be set by 'NZP-CSI-RS-Resource'.

This disclosure describes the forwarding behaviour of SSB in NCR-Fwd for ease of description, but the contents of this disclosure can also be applied to the forwarding behaviour of CSI-RS in NCR-Fwd, i.e., the following disclosure can be interpreted by replacing SSB with CSI-RS.

When a base station transmits SSBs corresponding to N SSB indexes, the NCR may not forward all SSB transmissions. In order to perform measurements independently for transmissions on the base station's direct link and for forwarded links forwarded by the NCR, the NCR may forward only some SSB transmissions and not others.

For example, referring again to FIG. 15, the base station transmits SSBs for SSB indexes #0, #1, ..., and #7, but the NCR-Fwd may only perform forwarding in the time resources where SSBs for SSB indexes #4, #5, #6, and #7 are transmitted. This allows the UE to determine the strength/quality of the received signal for signals transmitted directly from the base station via SSB indexes #0, #1, #2, and #3, and to determine the strength/quality of the received signal for signals forwarded from the NCR via SSB indexes #4, #5, #6, and #7.

In this case, SSB indexes #4, #5, #6, and #7 are transmitted for measurement of signals forwarded by the NCR, so the NCR-MT does not receive those SSBs and may only perform measurements via SSB indexes #0, #1, #2, and #3. In other words, the TCI states applied by the NCR-MT to transmit and receive from the base station have one of SSB index #0, #1, #2, #3 as the source DL RS, and depending on the TCI state applied, DL Rx may be performed using one of the appropriate DL Rx beams to receive SSB index #0, #1, #2, #3. In this case, the source DL RS for a specific TCI state is the DL RS ID that is in a QCL relationship with the transmission for the TCI state, e.g. the 'referenceSignal' in the TCI-State IE.

On the other hand, the NCR-Fwd may not perform forwarding for SSB indexes #0, #1, #2, and #3, and perform forwarding only for SSB indexes #4, #5, #6, and #7. At this time, it is necessary to determine which DL Rx beam the NCR-Fwd applies to receive SSB indexes #4, #5, #6, and #7 from the base station through the backhaul link. In other words, it is necessary to determine which DL Rx beam the NCR-Fwd applies to perform reception in the time resource where the SSB corresponding to the SSB index that the NCR-Fwd performs forwarding is transmitted.

Since the NCR-Fwd cannot perform measurements on its own, it may perform DL Rx using the beam directions that the NCR-MT applies for the control link, i.e., it may perform DL Rx from the backhaul link by applying one of the TCI states set for the NCR-MT.

If NCR-MT performs measurements only for SSB indexes #0, #1, #2, #3, NCR-MT may determine the appropriate DL Rx beam to apply to receive SSB indexes #0, #1, #2, #3. However, since NCR-MT does not perform measurements for SSB indexes #4, #5, #6, #7, NCR-MT cannot determine the appropriate DL Rx beam to apply to receive SSB indexes #4, #5, #6, #7.

### <Method for determining DL-Rx beam of NCR-Fwd in time resource of forwarding SSB>

Below, a method for determining the direction of DL-Rx and/or UL-Tx beams in resources that forward DL RSs such as SSB and CSI-RS when NCR-Fwd performs forwarding to a backhaul link is described.

In the example of FIG. 15, the base station may transmit SSB transmissions for SSB indexes #0, #1, #2, and #3 in different beam directions for each index. NCR-MT may perform reception by applying different DL Rx beams to receive SSB for SSB indexes #0, #1, #2, and #3. NCR-MT may receive SSB for SSB index #0, #1, #2, #3 and report good SSB index(es) and measurement value(s) for measurement (e.g., L1-RSRP (Reference Signals Received Power)). Then, the base station may transmit the DL signal for the NCR-MT in the beam direction in which the SSB with good measurement results was transmitted. For example, if the measurement value for SSB index #3 is the best, the base station may perform downlink transmission to NCR-MT in the beam direction used when transmitting SSB index #3. And, to receive it, NCR-MT may perform downlink reception using the DL Rx beam that was the best when receiving SSB index #3.

The NCR-Fwd may receive SSBs for SSB indexes #4, #5, #6, and #7 from the base station and transmit the SSBs over the access link in different Tx beam directions according to the SSB index. At this time, the base station may transmit SSB for SSB indexes #4, #5, #6, and #7 in the beam direction that is best received by the NCR-MT. If the NCR-MT reports SSB index #3 as having the best measurement result among SSB indexes #0, #1, #2, and #3, the base station may apply the Tx beam direction applied when transmitting SSB index #3 to perform SSB transmission for SSB indexes #4, #5, #6, and #7.

In this case, it is desirable for NCR-Fwd to receive SSBs for SSB indexes #4, #5, #6, and #7 by applying the Rx beam that NCR-MT applied to receive SSBs for SSB index #3.

### Method 1. TCI-Status Indication

NCR-MT may be configured with the TCI status applied by NCR-Fwd in the transmission time resource of SSB from the base station.

At this time, the SSB may mean an SSB corresponding to an SSB index for which NCR-Fwd performs forwarding. That is, when there are multiple SSB indexes and NCR-Fwd performs forwarding operation for some SSB indexes, it may mean a transmission time resource of an SSB for an SSB index for which NCR-Fwd performs forwarding.

In the above proposal, independent TCI states can be set for each SSB index.

Alternatively, the TCI state may be applied only to some SSB indexes. For this purpose, a list of SSB indexes to which the TCI state is applied may be set.

This information can be set, for example, via RRC or MAC-CE.

When this TCI state is set, NCR-Fwd may apply the 'DL-Rx beam corresponding to the set TCI state' to perform reception to the backhaul link in the 'time resource where SSB is transmitted'.

In the above proposal, SSB may mean an SSB corresponding to an SSB index on which NCR-Fwd performs forwarding. That is, when there are multiple SSB indexes and NCR-Fwd performs forwarding operation for some SSB indexes, it may mean the transmission time resource of SSB for the SSB index for which NCR-Fwd performs forwarding.

In the above proposal, the 'time resource during which SSB is transmitted' may specifically mean the following.

It may mean the symbol(s) through which SSB is transmitted. In this case, the DL-Rx beam of NCR-Fwd may be different depending on the symbol resource within the same slot.

Or it may mean slot(s) including symbols in which SSB is transmitted. Considering that it is difficult to perform DL-Rx beam switching of NCR-Fwd at a symbol level, the DL-Rx beam may be determined on a slot-by-slot basis.

In the above proposal, the term 'DL-Rx beam corresponding to the TCI state' may specifically mean the following.

It means a DL-Rx beam identical to the DL-Rx beam of the NCR-MT corresponding to the TCI state. More specifically, it means a DL-Rx beam identical to the DL-Rx beam applied by the NCR-MT to receive an SSB for the SSB index that becomes the source DL RS of the TCI state.

When independent TCI state is set for each SSB index, the TCI states applied to determine the DL-Rx beam may differ for each time resource corresponding to the SSB index. In the time resource where SSB for SSB index #n is transmitted, the TCI state set for SSB index #n is used to determine the DL-Rx beam to apply.

If an independent TCI state is set for each SSB index, or if the set TCI state is applied only to some SSB indexes, NCR-Fwd may determine that an SSB index for which a TCI state is not set or to which the set TCI state is not applied is an SSB index for which forwarding is not performed. And/or, for an SSB index for which a TCI state is set or to which the set TCI state is applied, NCR-Fwd may determine that the SSB index is an SSB index for which forwarding is performed. In this case, NCR-Fwd performs forwarding in the time resource in which the SSB corresponding to the SSB index determined to perform forwarding is transmitted. Additionally, NCR-Fwd may not perform forwarding in the time resource in which the SSB corresponding to the SSB index determined not to perform forwarding is transmitted.

### Method 2. Indication of the source SSB index.

NCR-MT may be configured with the SSB index (source SSB index) that becomes the source of the TCI applied by NCR-Fwd in the transmission time resource of SSB, from the base station.

The above SSB may mean an SSB corresponding to an SSB index for which NCR-Fwd performs forwarding. That is, when there are multiple SSB indexes and NCR-Fwd performs forwarding operation for some SSB indexes, it may mean a transmission time resource of an SSB for an SSB index for which NCR-Fwd performs forwarding.

In the above proposal, an independent source SSB index may be set for each SSB index. At this time, the source SSB index may be set only for some SSB indexes. At this time, if the source SSB index is not set for a specific SSB index, it can be assumed that the SSB index and the source SSB index are identical.

Alternatively, the source SSB index may be applied only to some SSB indexes. For this purpose, a list of SSB indexes to which the source SSB index is applied may be set.

This information may be set, for example, via RRC or MAC-CE.

When a source SSB index is set, NCR-Fwd may apply the configured 'DL-Rx beam corresponding to the source SSB index' to perform reception to the backhaul link in the 'time resource where SSB is transmitted'.

In the above proposal, SSB may mean an SSB corresponding to an SSB index on which NCR-Fwd performs forwarding. That is, when there are multiple SSB indexes and NCR-Fwd performs forwarding operation for some SSB indexes, it may mean the transmission time resource of SSB for the SSB index for which NCR-Fwd performs forwarding.

In the above proposal, the 'time resource during which SSB is transmitted' may specifically mean the following.

i) It may mean the symbol(s) through which SSB is transmitted. In this case, the DL-Rx beam of NCR-Fwd may be different depending on the symbol resource within the same slot.

Or ii) it may mean slot(s) including symbols in which SSB is transmitted. Considering the difficulty of performing DL-Rx beam switching of NCR-Fwd at symbol level, DL-Rx beam may be determined on a slot basis.

In the above proposal, 'DL-Rx beam corresponding to source SSB index' may specifically mean the following.

It refers to a DL-Rx beam identical to the DL-Rx beam applied by NCR-MT to receive SSB for the SSB index that becomes the source SSB index.

When an independent source SSB index is set for each SSB index, the source SSB index applied to determine the DL-Rx beam for each time resource corresponding to the SSB index may be different. The time resource from which the SSB for SSB index #n is transmitted uses the source SSB index set for SSB index #n to determine which DL-Rx beam to apply.

If an independent source SSB index is set for each SSB index, or if the source SSB index set for only some SSB indexes is applied, NCR-Fwd may determine that an SSB index for which no source SSB index is set or for which the source SSB index set is not applied is an SSB index for which forwarding is not performed. And/or the source SSB index is set, or for an SSB index to which the set source SSB index applies, the NCR-Fwd may determine that it is the SSB index for which it is performing forwarding. In this case, the NCR-Fwd performs the forwarding on the time resource on which the SSB corresponding to the SSB index determined to be performing the forwarding is transmitted. Additionally, the NCR-Fwd may not perform forwarding on the time resource on which the SSB corresponding to the SSB index determined not to be performing forwarding is transmitted.

### <Method for determining the UL-Tx beam of NCR-Fwd in time resources forwarding PRACH>

In the following, it is proposed how NCR-Fwd determines the direction of the UL-Tx beam on the physical random access channel (PRACH) resource when forwarding to the backhaul link.

When PRACH slots, which are slot resources that can transmit PRACH, exist, there are multiple PRACH occasions (which may be abbreviated as ROs) within a single PRACH slot. There may be multiple ROs in the frequency domain within a PRACH slot, and there may be multiple ROs in the time domain. A UE may transmit PRACH through a specific RO.

Each RO is associated with a specific SSB index. An RO is associated with one SSB index, and multiple ROs can be associated with the same SSB index.

When a UE determines that the reception quality (e.g., RSRP) of a specific SSB is good and sends a PRACH to that cell, it may send the PRACH through the RO(s) associated with the received SSB index.

When NCR-Fwd performs UL forwarding in a time resource (e.g., slot, symbol) containing a specific RO to the base station, the UL Tx beam applied by NCR-Fwd may vary depending on the SSB index associated with that RO. This is because the DL Tx beam direction of the base station may change depending on the SSB index, and accordingly, the UL Tx beam direction appropriate for transmitting PRACH may change.

NCR-Fwd may perform UL transmission by applying UL Tx beams in each time resource as instructed by the base station without knowing information about PRACH transmission resources. However, in this case, there may be a burden of signaling overhead as it should receive instructions from the base station each time about the beam that NCR-Fwd should apply.

Meanwhile, if NCR-Fwd determines the UL Tx beam applied in the PRACH transmission resource and applies the beam in the corresponding resource, the burden of having to receive beam instructions from the base station every time can be reduced. To this end, since NCR-MT receives system information from the base station, NCR-Fwd can also know information about PRACH transmission resources. Using the information about these PRACH transmission resources and the information about the associated SSB index in each RO, NCR-Fwd can determine the UL Tx beam to the backhaul link in the PRACH transmission resources as follows.

NCR-Fwd can determine the UL Tx beam to the backhaul link in the time resource where a specific RO exists as follows.

### Method 1.

When the SSB index associated with a specific RO exists, the beam direction applied by NCR-Fwd for DL Rx in the time resource where the SSB corresponding to that SSB index is transmitted may be determined as the UL Tx beam in the time resource where that RO exists.

In other words, the NCR-Fwd may determine and apply that the beam direction applied for UL Tx in the time resource where a specific RO is present is the same as the beam direction applied for DL Rx in the time resource that receives the SSB associated with that RO.

In this case, the time resource in which the RO exists may mean the symbol(s) in which the RO exists. This requires that there are no different ROs associated with different SSB indexes on the same symbol resource.

Alternatively, the time resource in which the RO exists can refer to the slot in which the RO exists. This requires that there are no different ROs associated with different SSB indexes on the same slot resource.

### Method 2.

NCR-Fwd may perform UL transmission in the time resource where a specific RO is present by applying the UL Tx beam direction associated with that RO.

To this end, the NCR-MT may be configured by the base station with information about the beam direction that the NCR-Fwd applies for UL Tx in the time resource in which a specific RO is present. More specifically, the NCR-MT may be configured from the base station, for each RO, with information about the UL Tx beam associated with that RO.

Characteristically, these configurations may only be set for ROs that require NCR-Fwd to perform forwarding among all ROs.

In this case, the time resource in which the RO exists may mean the symbol(s) in which the RO exists. This requires that there are no different ROs associated with different SSB indexes on the same symbol resource.

Alternatively, the time resource in which the RO exists may refer to the slot in which the RO exists. This requires that there are no different ROs associated with different SSB indexes on the same slot resource.

### Method 3.

NCR-Fwd may perform UL transmission by applying the UL Tx beam direction linked to the SSB index associated with a specific RO in the time resource in which that RO exists.

For this purpose, information about the UL Tx beam direction that is linked to a specific SSB index may be configured from the base station. More specifically, the NCR-MT may be configured with, from the base station, for each SSB index, information about the UL Tx beam linked to that SSB.

These configurations may only be set for the SSB indexes for which NCR-Fwd should perform forwarding among all SSB indexes.

In this case, NCR-Fwd will perform UL transmission by applying the same UL Tx beam direction (the UL Tx beam direction linked to the corresponding SSB index) in time resources where ROs associated with the same SSB index exist.

In this case, the time resource in which the RO exists may mean the symbol(s) in which the RO exists. This requires that there are no different ROs associated with different SSB indexes on the same symbol resource.

Alternatively, the time resource in which the RO exists may refer to the slot in which the RO exists. This requires that there are no different ROs associated with different SSB indexes on the same slot resource.

In the above-described methods 2 and 3, the information about the UL Tx beam may be specifically as follows.
i) SRI: SRI (SRS Resource Indicator) may be used to indicate the UL-Tx beam direction for the backhaul link of NCR-Fwd. That is, by indicating SRI, the UL Tx beam direction applied by NCR-Fwd can be indicated. At this time, the Tx beam direction of the NCR-Fwd corresponding to each SRI may be the same as the beam direction applied when the NCR-MT transmits the SRS corresponding to the SRI to the control link.
ii) TCI-State ID: Beam correspondence may be assumed between DL reception and UL transmission on the backhaul link of NCR-Fwd. In this case, by indicating the DL-Rx beam of NCR-Fwd, the UL-Tx beam of NCR-Fwd can be indicated. By indicating a specific DL-Rx beam to indicate the UL-Tx beam of NCR-Fwd, it can mean that UL-Tx is performed using the same beam as the corresponding DL-Rx beam.

In this case, the DL TCI state ID may be used to indicate the UL Tx beam direction for the backhaul link of NCR-Fwd. That is, the UL Tx beam direction applied by NCR-Fwd can be indicated by indicating the TCI state ID. At this time, the TCI state ID means the ID for the TCI state configured to NCR-MT for transmission and reception operations to the control link of NCR-MT.

iii) SSB Index: Beam correspondence may be assumed between DL reception and UL transmission on the backhaul link of NCR-Fwd. In this case, the UL-Tx beam of NCR-Fwd may be indicated by indicating the DL-Rx beam of NCR-Fwd. If a specific DL-Rx beam is indicated to inform the UL-Tx beam of the NCR-Fwd, it may mean that UL-Tx is performed using the same beam as that DL-Rx beam.

To indicate the UL Tx beam direction for the backhaul link of NCR-Fwd, the SSB index and/or the CSI-RS index may be used. That is, by indicating the SSB index and/or the CSI-RS index, the UL Tx beam direction applied by NCR-Fwd can be indicated.

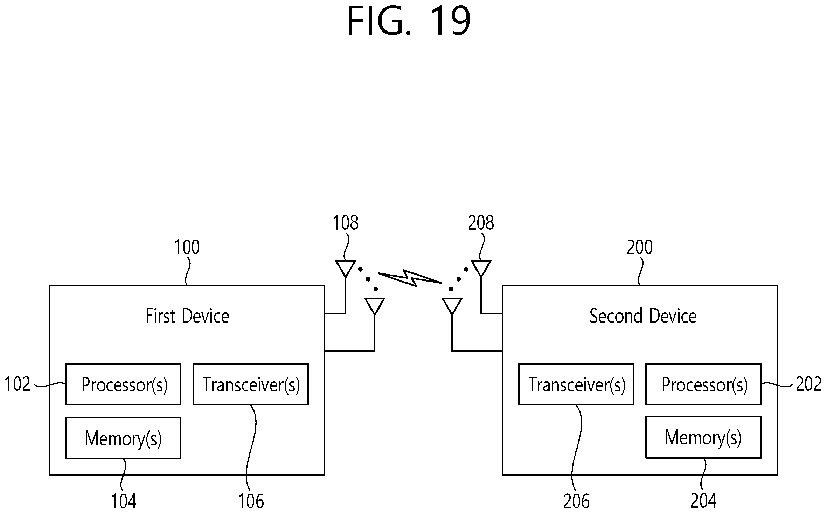

FIG. 19 illustrates a wireless device applicable to this specification.

Referring to FIG. 19, the first wireless device 100 and the second wireless device 200 may transmit/receive wireless signals through various wireless access technologies (e.g., LTE, NR).

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In this specification, the wireless device may refer to a communication modem/circuit/chip.

The processor 102 may be included in an NCR including a network-controlled repeater (NCR)-mobile termination (MT) and an NCR-Forwarding (Fwd). The processor 102 performs an initial access procedure with a network, receives synchronization signal/physical broadcast channel block (SSB) configuration information from the network and performs a forwarding operation based on the SSB configuration information. Here, the processor performs the forwarding operation only in a time resource in which an SSB related to a specific SSB index among SSB indexes informed by the SSB configuration information is transmitted.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In this specification, the wireless device may refer to a communication modem/circuit/chip.

Processor 202 may be included in a base station. The processor 202 performs an initial access procedure with a network-controlled repeater (NCR) including NCR-mobile termination (MT) and NCR-Forwarding (Fwd) through the NCR-MT, transmits synchronization signal/physical broadcast channel block (SSB) configuration information to the NCR-MT and controls a forwarding operation of the NCR-Fwd based on the SSB configuration information. Here, the processor controls the NCR-Fwd to perform the forwarding operation only in a time resource in which an SSB related to a specific SSB index among SSB indexes informed by the SSB configuration information is transmitted.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The one or more processors 102 and 202 may be implemented as at least one computer readable medium (CRM) including instructions based on being executed by the at least one processor.

That is, CRM performs steps comprising: performing an initial access procedure with a network, receiving synchronization signal/physical broadcast channel block (SSB) configuration information from the network and performing a forwarding operation based on the SSB configuration information. Here, the processor performs the forwarding operation only in a time resource in which an SSB related to a specific SSB index among SSB indexes informed by the SSB configuration information is transmitted.

The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

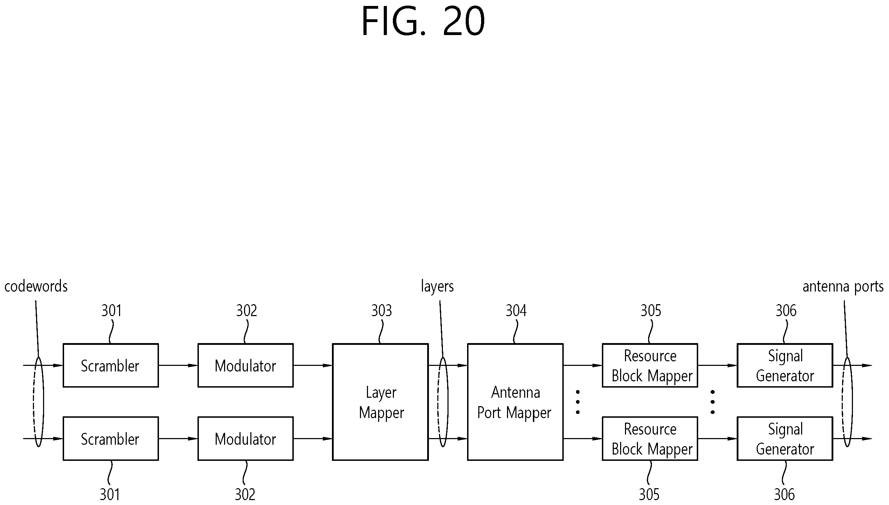

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

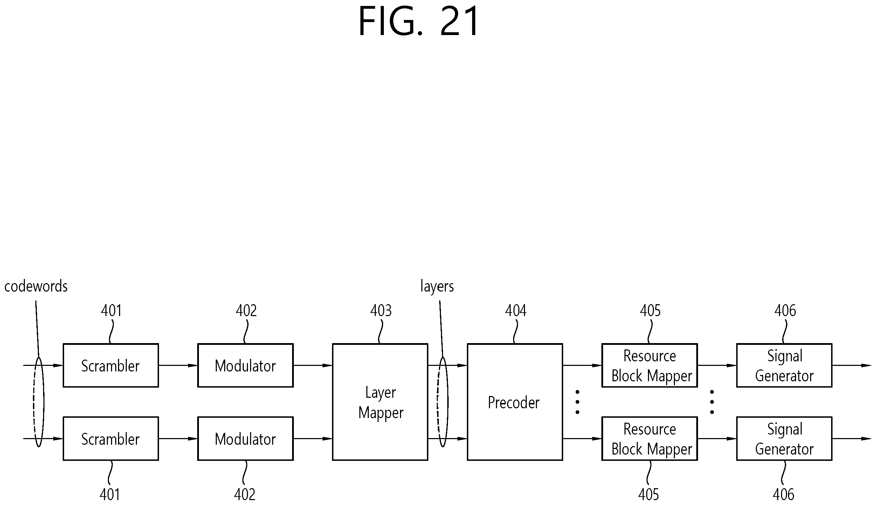

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

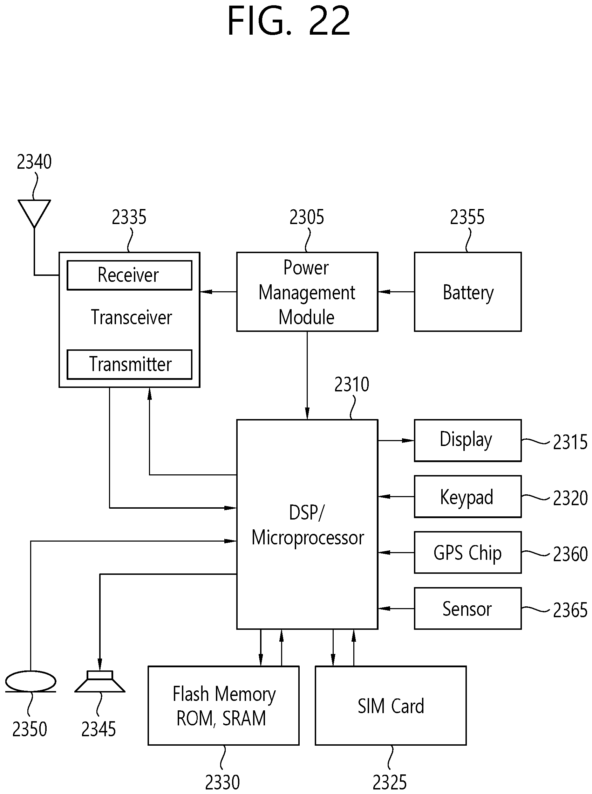

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 22 may be the transceivers 106 and 206 in FIG. 19.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

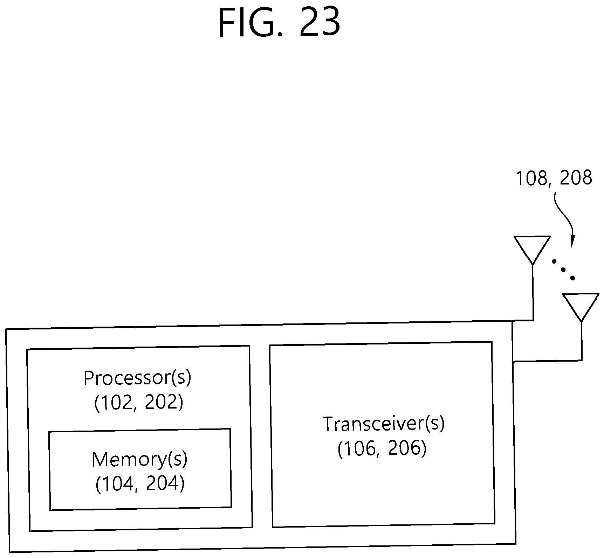

FIG. 23 shows another example of a wireless device.

Referring to FIG. 23, the wireless device may include at least one processor 102, 202, at least one memory 104, 204, at least one transceiver 106, 206, and one or more antennas 108, 208.

The example of the wireless device described in FIG. 19 is different from the example of the wireless described in FIG. 23 in that the processors 102 and 202 and the memories 104 and 204 are separated in FIG. 19 whereas the memories 104 and 204 are included in the processors 102 and 202 in the example of FIG. 23. That is, the processor and the memory may constitute one chipset.

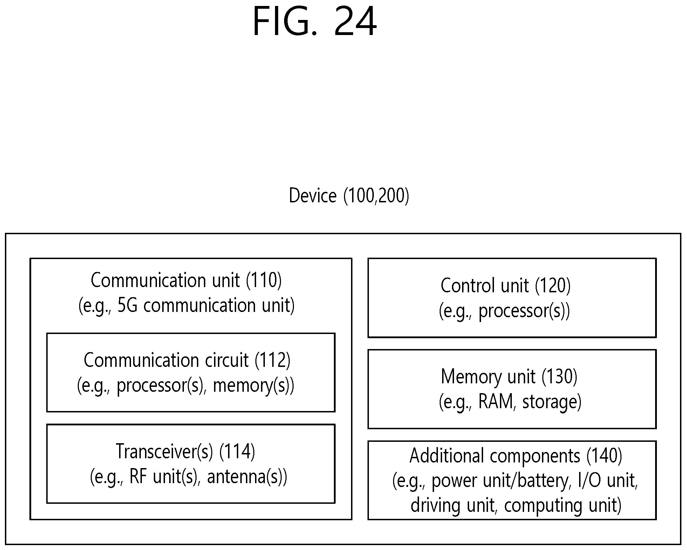

FIG. 24 shows another example of a wireless device applied to the present specification. The wireless device may be implemented in various forms according to a use-case/service.

Referring to FIG. 24, wireless devices 100 and 200 may correspond to the wireless devices of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

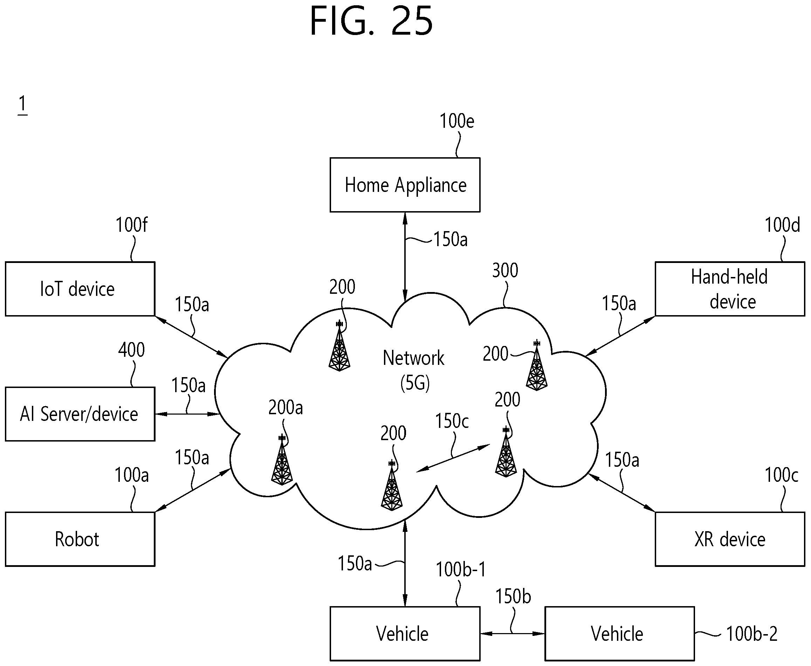

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast UE, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. In addition, each element, component, unit/portion, and/or module within the wireless devices 100 and 200 may further include one or more elements. For example, the control unit 120 may be configured by a set of one or more processors. For example, the control unit 120 may be configured by a set of a communication control processor, an application processor, an Electronic Control Unit (ECU), a graphical processing unit, and a memory control processor. For another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 25 illustrates a communication system 1 applied to the present specification.

Referring to FIG. 25, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 6. For convenience of description, FR1 of the frequency ranges used for an NR system may refer to a "sub 6 GHz range", and FR2 may refer to an "above 6 GHz range" and may be referred to as a millimeter wave (mmW).

**[Table 6]**

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 7. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

**[Table 7]**

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a device in a wireless communication system, the method comprising:
performing an initial access procedure with a network;
receiving synchronization signal/physical broadcast channel block (SSB) configuration information from the network; and
performing a forwarding operation based on the SSB configuration information,
wherein the device performs the forwarding operation only in a time resource in which an SSB related to a specific SSB index among SSB indexes informed by the SSB configuration information is transmitted.

2. The method of claim 1, wherein the SSB configuration information includes a list of SSB indexes performing the forwarding operation, and the specific SSB index is an SSB index included in the list.

3. The method of claim 1, wherein the device includes a network-controlled repeater (NCR)-mobile termination (MT) and an NCR-Forwarding (Fwd).

4. The method of claim 3, wherein a transmission configuration indicator (TCI) state is configured for transmission on an access link of the NCR-Fwd.

5. The method of claim 4, wherein the NCR-Fwd determines that an SSB index mapped to the TCI state is an SSB index for performing a forwarding operation.

6. The method of claim 4, wherein the NCR-Fwd determines that an SSB index that is not mapped to the TCI state is an SSB index that does not perform a forwarding operation.

7. The method of claim 4, wherein the TCI state is a valid TCI state.

8. The method of claim 3, wherein the NCR-Fwd determines an SSB index among SSB indexes informed by the SSB configuration information, in which a beam index applied by the NCR-Fwd is indicated, as an SSB index for performing a forwarding operation.

9. The method of claim 3, wherein the NCR-Fwd determines an SSB index among SSB indexes informed by the SSB configuration information, in which a beam index applied by the NCR-Fwd is not indicated, as an SSB index that does not perform a forwarding operation.

10. The method of claim 3, wherein the NCR-MT receives a first list of first SSB indexes for operation of the NCR-MT and a second list of second SSB indexes for operation of the NCR-Fwd.

11. The method of claim 10, wherein the NCR-Fwd determines each SSB index included in the second list as an SSB index for performing a forwarding operation.

12. The method of claim 10, wherein the NCR-Fwd determines each SSB index included in the first list as an SSB index that does not perform a forwarding operation.

13. The method of claim 10, wherein the NCR-Fwd determines an SSB index included in both the first list and the second list as an SSB index for performing the forwarding operation of the NCR-Fwd.

14. The method of claim 1, wherein the SSB configuration information informs of a beam identity (ID) or a TCI state related with each SSB index, and
wherein the NCR-Fwd performs a forwarding operation of an access link by using a beam determined based on a beam ID or a TCI state related with the specific SSB index in a time resource in which an SSB having the specific SSB index is transmitted.

15. An apparatus, comprising:
at least one transceiver,
at least one memory; and
at least one processor operably coupled with the at least one memory and the at least one transceiver,
wherein the at least one processor is adapted to:
perform an initial access procedure with a network;
receive synchronization signal/physical broadcast channel block (SSB) configuration information from the network; and
perform a forwarding operation based on the SSB configuration information,
wherein the processor performs the forwarding operation only in a time resource in which an SSB related to a specific SSB index among SSB indexes informed by the SSB configuration information is transmitted.

16. The apparatus of claim 15, wherein the SSB configuration information includes a list of SSB indexes performing the forwarding operation, and the specific SSB index is an SSB index included in the list.

17. The apparatus of claim 15, wherein the device includes a network-controlled repeater (NCR)-mobile termination (MT) and an NCR-Forwarding (Fwd).

18. The apparatus of claim 17, wherein a transmission configuration indicator (TCI) state is configured for transmission on an access link of the NCR-Fwd.

19. The apparatus of claim 18, wherein the NCR-Fwd determines that an SSB index mapped to the TCI state is an SSB index for performing a forwarding operation.

20. The apparatus of claim 18, wherein the NCR-Fwd determines that an SSB index that is not mapped to the TCI state is an SSB index that does not perform a forwarding operation.

21. The apparatus of claim 18, wherein the TCI state is a valid TCI state.

22. The apparatus of claim 17, wherein the NCR-Fwd determines an SSB index among SSB indexes informed by the SSB configuration information, in which a beam index applied by the NCR-Fwd is indicated, as an SSB index for performing a forwarding operation.

23. The apparatus of claim 17, wherein the NCR-Fwd determines an SSB index among SSB indexes informed by the SSB configuration information, in which a beam index applied by the NCR-Fwd is not indicated, as an SSB index that does not perform a forwarding operation.

24. The apparatus of claim 17, wherein the NCR-MT receives a first list of first SSB indexes for operation of the NCR-MT and a second list of second SSB indexes for operation of the NCR-Fwd.

25. The apparatus of claim 24, wherein the NCR-Fwd determines each SSB index included in the second list as an SSB index for performing a forwarding operation.

26. The apparatus of claim 24, wherein the NCR-Fwd determines each SSB index included in the first list as an SSB index that does not perform a forwarding operation.

27. The apparatus of claim 24, wherein the NCR-Fwd determines an SSB index included in both the first list and the second list as an SSB index for performing the forwarding operation of the NCR-Fwd.

28. The apparatus of claim 15, wherein the SSB configuration information informs of a beam identity (ID) or a TCI state related with each SSB index, andwherein the NCR-Fwd performs a forwarding operation of an access link by using a beam determined based on a beam ID or a TCI state related with the specific SSB index in a time resource in which an SSB having the specific SSB index is transmitted.

29. An apparatus of a network-controlled repeater (NCR) including NCR-mobile termination (MT) and NCR-Forwarding (Fwd), the apparatus comprising:
at least one memory, and
at least one processor operably coupled to the at least one memory,
wherein the at least one processor is adapted to:
perform an initial access procedure with a network;
receive synchronization signal/physical broadcast channel block (SSB) configuration information from the network; and
perform a forwarding operation based on the SSB configuration information,
wherein the processor performs the forwarding operation only in a time resource in which an SSB related to a specific SSB index among SSB indexes informed by the SSB configuration information is transmitted.

30. At least one computer-readable medium (CRM) comprising instructions based on being executed by at least one processor, wherein the CRM performs steps comprising:
performing an initial access procedure with a network;
receiving synchronization signal/physical broadcast channel block (SSB) configuration information from the network; and
performing a forwarding operation based on the SSB configuration information,
wherein the processor performs the forwarding operation only in a time resource in which an SSB related to a specific SSB index among SSB indexes informed by the SSB configuration information is transmitted.

31. A method of operating a base station in a wireless communication system, the method comprising:
performing an initial access procedure with a network-controlled repeater (NCR) including NCR-mobile termination (MT) and NCR-Forwarding (Fwd) through the NCR-MT;
transmitting synchronization signal/physical broadcast channel block (SSB) configuration information to the NCR-MT; and
controlling a forwarding operation of the NCR-Fwd based on the SSB configuration information,
wherein the base station controls the NCR-Fwd to perform the forwarding operation only in a time resource in which an SSB related to a specific SSB index among SSB indexes informed by the SSB configuration information is transmitted.

32. A base station, comprising:
at least one transceiver;
at least one memory; and
at least one processor operably coupled with the at least one memory and the transceiver,
wherein the at least one processor is adapted to:
perform an initial access procedure with a network-controlled repeater (NCR) including NCR-mobile termination (MT) and NCR-Forwarding (Fwd) through the NCR-MT;
transmit synchronization signal/physical broadcast channel block (SSB) configuration information to the NCR-MT; and
control a forwarding operation of the NCR-Fwd based on the SSB configuration information,
wherein the base station controls the NCR-Fwd to perform the forwarding operation only in a time resource in which an SSB related to a specific SSB index among SSB indexes informed by the SSB configuration information is transmitted.
